# FASCICULE DE BREVET EUROPEEN

(11) **EP 3 059 191 B1**
(45) Date de publication et mention de la délivrance du brevet: **12.01.2022**
(21) Numéro de dépôt: 16156571.8
(22) Date de dépôt: 19.02.2016
(51) Int. Cl.: B65G 47/90, B65G 47/06

(54) **MACHINE ET PROCÉDÉ DE CONVOYAGE D'ARTICLES**
MASCHINE UND VERFAHREN ZUR FÖRDERUNG VON ARTIKELN
MACHINE AND METHOD FOR CONVEYING ITEMS

(30) Priorité: 20.02.2015 FR 1551481
(43) Date de publication de la demande: 24.08.2016
(73) Titulaire: SYNERLINK, 95650 Puiseux-Pontoise (FR)
(72) Inventeur: BONNIER, Christophe, 95350 SAINT-BRICE-SOUS-FORET (FR); HENRY, Xavier, 78125 GAZERAN (FR); DANDY, Laurent, 78700 CONFLANS SAINTE HONORINE (FR)
(74) Mandataire: Derambure Conseil

(56) Documents cités:
- EP-A1- 1 174 344
- EP-A1- 2 668 124
- FR-A1- 2 631 604
- FR-A1- 2 792 920
- US-A- 4 191 003

## Description

L'invention est relative au convoyage d'articles, notamment dans une chaîne de production.

L'invention s'applique tout spécialement au cas de pots tel que typiquement un pot en matière plastique, en carton paraffiné ou analogue et destiné à être fermé par un opercule. Le terme « pot » doit être compris au sens large comme comprenant les pots à proprement parler, mais également les barquettes, les coupelles, ou toute autre forme d'emballage primaire analogue. Les articles peuvent se présenter sous forme de pots uniques ou de plaquettes individualisées comprenant plusieurs pots côte à côte et attachés les uns aux autres en étant agencés en colonnes et/ou rangées avec entre eux des lignes ou zones frangibles à plus faible résistance. Par exemple, une plaquette peut comporter deux pots ou quatre pots agencés en deux rangées comprenant chacune deux pots ou encore six pots en deux rangées comprenant chacune trois pots...

Comme détaillé ci-après, l'invention s'applique au cas de plaquettes séparées mais tout une application toute particulière au cas d'articles sous forme de pots uniques, c'est-à-dire individuellement séparés et n'étant pas liés en plaquettes, lesdits pots uniques étant remplis ou non de contenant et fermés ou non par des opercules.

Un tel article contient typiquement, ou est typiquement destiné à contenir, un contenu homogène ou non, présentant un état d'ensemble plus ou moins fluide, comportant éventuellement des morceaux plus ou moins solides. Un tel contenu est par exemple un produit lacté ou un dessert, cette liste n'étant pas limitative.

Ainsi par exemple, l'invention trouve notamment une application dans la production de produits laitiers frais ou ultra-frais tels que yaourts et assimilés, crèmes dessert, glaces et assimilés, mais également des produits fromagers, des compotes... L'invention s'applique également dans la production de produits de natures et/ou de destinations différentes mais que l'on peut considérer comme analogues au regard de leur convoyage dans la chaine de production.

Pour la production de tels produits, on dispose ou on fabrique un contenu à emballer, on dispose ou on fabrique des pots et des opercules, individuels ou agencés en plaquettes, on dispose ou on fabrique éventuellement des flans de suremballage individualisés. Puis, on réalise les produits eux-mêmes, c'est-à-dire que l'on emplit les pots avec le ou les contenus souhaités puis on ferme les pots par mise en place des opercules. Puis on forme des lots ou packs et s'ils comprennent plusieurs pots, on assure leur regroupement, par exemple superposition. Puis, on dispose éventuellement autour de chaque pot, lot ou pack un flan de suremballage que l'on plie et que l'on ferme sur lui-même. Puis on encaisse le cas échéant les articles.

Des machines de convoyages permettent le transport d'articles, c'est-à-dire de produits à divers stades de leur production, entre chacune de ces opérations. On entend notamment par articles d'une chaîne de production, des produits à divers stades de leur production, notamment pots vides, pots emplis de contenu, pots emplis de contenu et fermés, ou encore pots emplis de contenu, fermés et suremballés.

Une telle machine de convoyage comporte une arrivée d'un lot entrant d'articles séparés, disposés sur, ou dans, un support de lot entrant, et une sortie articles en un lot d'articles sortants.

On connait à ce titre des machines de convoyages comportant un tapis de convoyage sur lequel les articles sont poussés, le tapis de convoyage permettant de déplacer les articles d'un emplacement d'opération à l'emplacement d'opération suivant. De tels dispositifs de convoyage présentent l'inconvénient de perdre, au cours du convoyage, les informations sur la position relative et l'orientation relative des articles.

Ces informations sont essentielles dans de nombreux cas pour le traitement postérieur des articles, par exemple pour la fermeture des pots, l'alignement des décors, l'assemblage en lot ou pack, le suremballage ou encore l'encaissage des articles. Il est alors nécessaire de mettre en place des moyens de détection de position et d'orientation des articles et des moyens de repositionnement et/ou de recalage d'orientation, en aval de telles machines de convoyage, ce qui est complexe et couteux.

On entend ici par « informations sur la position relative » une connaissance de la position d'un article par rapport à des articles adjacents et/ou par rapport à un référentiel général. On entend notamment une information sur la position dudit article dans un plan horizontal de la machine de convoyage, notamment un plan de déplacement général des articles à convoyer.

On entend également par « informations sur l'orientation relative » une connaissance de l'orientation d'un article par rapport à des articles adjacent et/ou par rapport à un référentiel général. On entend notamment une information sur l'orientation dudit article selon un axe vertical perpendiculaire audit plan horizontal de la machine de convoyage.

On connait par ailleurs des convoyeurs dits « à pas de pèlerin » qui permettent de déplacer des articles pas-à-pas en conservant au moins des informations sur la position relative des articles, et éventuellement également sur l'orientation relative des articles, telles qu'indiquées ci-dessus. De tels convoyeurs comportent usuellement une succession de barres montées sur des arbres à cames qui en venant successivement soulever les articles permettent leur avancée, pas-à-pas, le long du convoyeur. De tels convoyeurs à « pas de pèlerin » présentent l'inconvénient d'être onéreux, car composés d'un grand nombre de pièces en mouvement synchronisé, et d'être usuellement limités au transport de pots individuels.

Le document FR 2 673 611 décrit un convoyeur à cycle rectangulaire pour prendre des articles sur un poste de production et disposer lesdits articles sur un tapis de convoyage. Du fait du contact non contrôlé entre les articles et le tapis de convoyage, les articles peuvent être amenés à sauter ou pivoter sur eux-mêmes lors de leur dépôt. De ce fait, ici également, il est nécessaire de mettre en place des moyens de repositionnement des articles en aval de la machine de convoyage. FR 2 792 920 A1 divulgue par ailleurs un procédé selon le préambule de la revendication 1 ainsi qu'une machine selon le préambule de la revendication 10.

Le problème à la base de l'invention est de donc proposer un procédé et une machine de convoyage qui permettent de conserver une information sur la position relative et l'orientation relative des articles lors du convoyage de sorte à permettre un traitement aval des articles sans repositionnement préliminaire. L'invention vise également à proposer un tel procédé et une telle machine de convoyage qui soient peu couteux et aisément adaptables.

A cet effet, et selon un premier aspect, l'invention a pour objet un procédé de convoyage d'articles dans une chaîne de production, dans lequel,
- on dispose d'un lot entrant d'articles comportant une pluralité d'articles séparés, disposés sur, ou dans, un support de lot entrant de sorte à être alignés selon un plan horizontal en une ou plusieurs colonnes longitudinales et/ou une ou plusieurs rangées transversales,
- on déplace la pluralité d'articles du lot entrant par rapport au support de lot entrant, de manière simultanée, selon une direction verticale perpendiculaire au plan horizontal, en conservant les articles immobiles par rapport au support de lot entrant dans le plan horizontal, de sorte à ce que les articles ne soient plus en contact avec le support de lot entrant et soient libres d'être déplacés dans le plan horizontal sans toucher le support de lot entrant,
- on amène les articles saisis à la verticale d'un tapis de convoyage horizontal, les articles étant espacés verticalement dudit tapis de convoyage par un espacement vertical prédéfini,
- puis, on déplace les articles dans la direction verticale, de manière simultanée, pour amener les articles à reposer sur le tapis de convoyage, et
- on évacue les articles en un lot d'articles sortants au moyen du tapis de convoyage.

Selon une caractéristique de ce procédé :
- lorsque les articles sont amenés à la verticale du tapis de convoyage, le tapis de convoyage présente un déplacement selon une direction de déplacement du plan horizontal avec une vitesse de déplacement,
- les articles saisis étant à la verticale du tapis de convoyage, on règle et on synchronise avec ladite vitesse de déplacement du tapis de convoyage un déplacement horizontal des articles, et
- on déplace les articles dans la direction verticale pour amener les articles à reposer sur le tapis de convoyage en conservant le déplacement horizontal des articles synchronisé avec la vitesse de déplacement du tapis de convoyage.

Selon une réalisation, les articles du lot entrant sont disposés, sur, ou dans, le support de lot entrant, en colonnes longitudinales régulièrement alignées de sorte à présenter un pas transversal prédéfini selon une direction transversale du plan horizontal, et à être espacées les unes des autres selon ladite direction transversale par des espacements transversaux de préhension.

Selon une réalisation, pour déplacer la pluralité d'articles du lot entrant, de manière simultanée, selon la direction verticale, on vient introduire dans les espacements transversaux de préhension du lot entrant des doigts longitudinaux d'un peigne robotisé, lesdits doigts longitudinaux étant régulièrement alignés de sorte à présenter ledit pas transversal prédéfini, et étant agencés de telle sorte que deux doigts longitudinaux voisins sont aptes à entourer transversalement les articles d'une colonne longitudinale d'articles du lot entrant et à soutenir les articles de ladite colonne longitudinale pour les saisir et les amener à la verticale du tapis de convoyage.

Selon une réalisation, les articles comportent au moins une portion d'extension inférieure et une portion supérieure, la portion supérieure présentant un encombrement transversal supérieur à un encombrement transversal de la portion d'extension inférieure, et, pour déplacer les articles du lot entrant selon une direction verticale, on vient contacter par en dessous la portion supérieure en entourant transversalement la portion inférieure.

Selon une réalisation, les articles sont du type comportant un corps avec une paroi de fond, une paroi latérale fermée sur elle-même et une fermeture de dessus, ainsi qu'une collerette vers la fermeture de dessus, ledit corps constituant la portion d'extension inférieure, ladite collerette constituant la portion supérieure.

Selon une réalisation, on contacte les articles uniquement par en-dessous, selon une direction verticale.

Selon une réalisation, pour déplacer les articles du lot entrant selon une direction verticale, on monte verticalement un peigne robotisé, par rapport au support de lot entrant horizontal, en maintenant le peigne robotisé horizontal, de sorte à venir contacter, et soulever du support de lot entrant, les articles du lot entrant. Selon une réalisation, pour déplacer les articles du lot entrant selon une direction verticale, on abaisse verticalement, par rapport à un peigne robotisé horizontal, le support de lot entrant sur, ou dans, lequel sont disposés les articles, en maintenant ledit support de lot entrant horizontal, de sorte à venir faire reposer les articles du lot entrant sur le peigne robotisé.

Selon une réalisation, pour déplacer les articles du lot entrant selon une direction verticale, on déplace un peigne robotisé et/ou le support de lot entrant de sorte à ce que le peigne robotisé et le support de lot entrant présentent une vitesse verticale relative inférieure à 200 millimètres par secondes lors d'un contact entre le peigne robotisé et les articles du lot entrant.

Selon une réalisation, on déplace un peigne robotisé, sur un tronçon de cheminement actif pour amener les articles à la verticale du tapis de convoyage, avec une première vitesse de déplacement dans le plan horizontal, et sur un tronçon de cheminement inactif de retour, dans lequel le peigne robotisé n'assure aucune fonction de portage des articles, avec une seconde vitesse de déplacement dans le plan horizontal supérieure à la première vitesse de déplacement.

Selon une réalisation, pour déplacer les articles dans la direction verticale pour amener les articles à reposer sur le tapis de convoyage, on abaisse verticalement un peigne robotisé, par rapport au tapis de convoyage fixe, de sorte à venir faire reposer les articles sur le tapis de convoyage.

Selon une réalisation, pour amener les articles à reposer sur le tapis de convoyage on abaisse verticalement le peigne robotisé par rapport au tapis de convoyage sur une course verticale supérieure à l'espacement vertical prédéfini, de sorte à ce que les articles perdent contact avec le peigne robotisé à la fin de ladite course verticale.

Selon une réalisation, pour évacuer les articles en un lot d'articles sortants au moyen du tapis de convoyage, on guide les articles sur le tapis de convoyage dans la direction de déplacement du plan horizontal, notamment au moyen de doigts longitudinaux d'un peigne robotisé entourant transversalement les articles.

Selon une réalisation, on déplace un peigne robotisé uniquement selon la direction verticale et selon une direction horizontale, la direction horizontale étant en particulier la direction de déplacement du tapis de convoyage.

Selon une réalisation, alors qu'on amène les articles saisis à la verticale du tapis de convoyage, on mesure au moins une caractéristique physique des articles saisis.

Selon une réalisation, on détermine la présence ou l'absence d'articles défectueux parmi les articles saisis, à partir de la caractéristique physique mesurée, et si on détermine la présence d'articles défectueux parmi les articles saisis, on évacue les articles saisis.

Selon une réalisation, les articles du lot d'articles sortants présentent, dans le plan horizontal, les mêmes orientations relatives et les mêmes positions relatives que les articles du lot entrant.

Selon une réalisation, lorsqu'on règle et on synchronise avec la vitesse de déplacement du tapis de convoyage un déplacement horizontal des articles, on définit une position horizontale des articles du lot d'articles sortants par rapport au tapis de convoyage, en particulier une position horizontal selon la direction de déplacement du tapis de convoyage.

Selon une réalisation, lorsqu'on on amène les articles saisis à la verticale d'un tapis de convoyage horizontal, on écarte verticalement desdits articles des déchets de découpe d'articles pour que lesdits déchets de découpe d'articles n'entrent pas en contact avec les articles saisis.

Selon une réalisation, on réitère les étapes du procédé une pluralité de fois de sorte à assurer, sur le tapis de convoyage, un flux d'articles sortant comportant des rangées d'articles, transversales à la direction de déplacement du tapis de convoyage, régulièrement espacées par un pas d'espacement longitudinal prédéfini, les articles étant arrangés en une ou plusieurs colonnes.

Selon un deuxième aspect, l'invention a pour objet une machine de convoyage d'articles dans une chaîne de production, pour la mise en œuvre du procédé tel que décrit ci-avant, qui comporte :
- vers l'amont, un support de lot entrant sur, ou dans, lequel sont disposés une pluralité d'articles séparés d'un lot entrant d'articles de sorte à être alignés selon un plan horizontal en une ou plusieurs colonnes longitudinales et/ou une ou plusieurs rangées transversales,
- vers l'aval, un tapis de convoyage horizontal pour évacuer les articles en un lot d'articles sortants,
- vers l'amont, des moyens pour déplacer la pluralité d'articles du lot entrant, de manière simultanée, selon une direction verticale perpendiculaire au plan horizontal, en conservant les articles immobiles par rapport au support de lot entrant dans le plan horizontal, de sorte à ce que les articles ne soient plus en contact avec le support de lot entrant et soient libres d'être déplacés dans le plan horizontal sans toucher le support de lot entrant,
- vers l'aval, des moyens pour amener les articles saisis à la verticale du tapis de convoyage, les articles étant espacés verticalement dudit tapis de convoyage par un espacement vertical prédéfini,
- vers l'aval, des moyens pour déplacer les articles dans la direction verticale, de manière simultanée, pour amener les articles à reposer sur le tapis de convoyage.

Selon une caractéristique d'une telle machine :
- le tapis de convoyage présente un déplacement selon une direction de déplacement du plan horizontal avec une vitesse de déplacement au moins lorsque les articles sont amenés à la verticale du tapis de convoyage,
- la machine comporte en outre vers l'aval, des moyens de réglage et de synchronisation avec la vitesse de déplacement du tapis de convoyage, d'un déplacement horizontal des articles amenés à la verticale du tapis de convoyage, et
- les moyens pour déplacer les articles dans la direction verticale pour amener les articles à reposer sur le tapis de convoyage sont apte à déplacer lesdits articles dans la direction verticale en conservant le déplacement horizontal des articles synchronisé avec la vitesse de déplacement du tapis de convoyage.

Selon une réalisation, les moyens pour amener les articles saisis à la verticale du tapis de convoyage, comportent un peigne robotisé et des moyens de déplacement du peigne robotisé.

Selon une réalisation, le peigne robotisé est muni de doigts longitudinaux régulièrement alignés de sorte à présenter un pas transversal prédéfini selon une direction transversale du plan horizontal perpendiculaire à la direction de déplacement du tapis de convoyage, et agencés de telle sorte que deux doigts longitudinaux voisins sont aptes à entourer transversalement les articles d'une colonne longitudinale d'articles du lot entrant et à soutenir les articles de ladite colonne longitudinale pour les saisir et les amener à la verticale du tapis de convoyage.

Selon une réalisation, le support de lot entrant comporte une pluralité de rainures longitudinales régulièrement alignées avec un pas transversal prédéfini selon une direction transversale du plan horizontal perpendiculaire à la direction de déplacement du tapis de convoyage, lesdites rainures longitudinales étant aptes à accueillir les doigts longitudinaux du peigne robotisé.

Selon une réalisation, le tapis de convoyage comporte une pluralité de bandes de convoyages, synchronisées, alignées avec un pas transversal prédéfini selon la direction transversale perpendiculaire à la direction de déplacement du tapis de convoyage, et espacées les unes des autres selon la direction transversale par des espacements transversaux de bandes aptes à accueillir les doigts longitudinaux du peigne robotisé.

Selon une réalisation, les doigts longitudinaux du peigne robotisé présentent chacun une face supérieure munie d'une pluralité de structures, réparties le long de la direction longitudinale des doigts longitudinaux.

Selon une réalisation, le peigne robotisé comprend un châssis sur lequel sont montés les doigts longitudinaux et un corps de peigne solidaire des moyens de déplacement, le châssis et le corps de peigne étant fixés ensemble par des moyens d'assemblage amovible.

Selon une réalisation, les moyens d'assemblage amovible sont des moyens d'assemblage magnétique comprenant un premier élément monté sur le corps de peigne et un second élément monté sur le châssis, les moyens d'assemblage amovible étant adaptés pour fixer le châssis sur le corps de peigne de manière amovible en réponse à une sollicitation suffisamment importante pour surmonter une force d'attraction magnétique prédéfinie entre le premier élément et le second élément.

Selon une réalisation, les moyens de déplacement comportent des moyens de déplacement du peigne robotisé selon une direction horizontale contrôlés par les moyens de réglage et de synchronisation avec la vitesse de déplacement du tapis de convoyage, lesdits moyens comportant notamment un moteur linéaire, par exemple sous forme de vérin magnétique.

Selon une réalisation, les moyens de déplacement comportent des moyens de déplacement du peigne robotisé selon la direction verticale aptes à déplacer le peigne robotisé en conservant les doigts longitudinaux du peigne robotisé horizontaux, lesdits moyens comportant notamment un ensemble à excentriques.

Selon une réalisation, la machine comporte en outre des moyens de mesure d'au moins une caractéristique physique des articles saisis.

Selon une réalisation, la machine comporte en outre des moyens de détermination aptes à déterminer la présence ou l'absence d'articles défectueux parmi les articles saisis à partir de ladite caractéristique physique des articles saisis et des moyens d'évacuation d'articles détectés défectueux.

Selon une réalisation, les moyens d'évacuation d'articles détectés défectueux comprennent un trou d'évacuation séparant le tapis de convoyage du support de lot entrant, dans le plan horizontal, les moyens d'évacuation d'articles détectés défectueux étant aptes à évacuer par le trou d'évacuation les articles défectueux parmi les articles saisis.

Selon une réalisation, le support de lot entrant comporte une pluralité de support de pots d'un outil de découpe d'une chaine de production.

Selon une réalisation, la pluralité de structures est adaptée pour écarter verticalement des articles saisis, de déchets de découpe d'articles, lors d'un mouvement du peigne robotisé.

De cette façon, le procédé et la machine de convoyage conservent une information sur la position relative et l'orientation relative des articles lors du convoyage. Il est ainsi possible de mettre en œuvre, sans repositionnement préliminaire, une grande variété de traitements avals des articles, et notamment une fermeture des articles, un alignement et une disposition de décors sur les articles, un assemblage en lot ou pack des articles, un suremballage des articles. En outre, ceci est obtenu moyennant une machinabilité élevée pour de hautes cadences, de façon sûre avec une ligne de fabrication qui évite les complexités pénalisantes. Par ailleurs, il est possible de mesurer des caractéristiques physiques des articles au cours du convoyage et d'évacuer des articles déterminés comme défectueux au vue desdites caractéristiques physiques mesurées.

On décrit maintenant brièvement les figures des dessins.

On décrit maintenant plusieurs modes de réalisation de l'invention à l'aide des dessins, dans lesquels :
- La figure 1 est une vue d'ensemble partielle, en perspective d'une machine de convoyage selon un mode de réalisation de l'invention.
- La figure 2 est une vue latérale de la machine de la figure 1, illustrant notamment le peigne robotisé, ses moyens de déplacement et le tapis de convoyage.
- La figure 3 est une vue de dessus de la machine de la figure 1, illustrant notamment les articles d'un lot entrant, le peigne robotisé et le tapis de convoyage.
- La figure 4 est une vue de détail partielle, en coupe d'un outil de découpe d'une chaine de production accueillant des supports de pots d'une machine de convoyage selon un mode de réalisation de l'invention.
- La figure 5 est une vue de détail en perspective partielle du peigne robotisé, illustrant notamment les doigts longitudinaux du peigne.
- La figure 6A est une vue latérale en coupe du peigne robotisé de la figure 5 illustrant les moyens d'assemblage magnétique,
- La figure 6B est une vue latérale en coupe du peigne robotisé de la figure 5, notamment lorsqu'un effort appliqué sur les doigts longitudinaux selon la direction longitudinale est supérieure à une force d'attraction magnétique prédéfinie entre le premier élément et le second élément des moyens d'assemblage magnétique,
- La figure 6C est une vue latérale en coupe du peigne robotisé de la figure 5, notamment lorsque le châssis est séparé du corps de peigne,
- La figure 7 est une vue de détail en perspective de la partie amont de la machine illustrant le support de lot entrant de la machine ainsi qu'un lot entrant d'articles.
- La figure 8 est une vue de face en coupe vertical de la partie amont de la machine, les doigts longitudinaux du peigne robotisé étant accueillis dans les rainures longitudinales du support de lot entrant, les articles du lot entrant étant disposés dans le support de lot entrant.
- La figure 9 est une vue partielle latérale de la machine, le peigne robotisé ayant saisi et amené les articles à la verticale du tapis de convoyage.
- La figure 10 est une vue de détail en perspective de la partie amont de la machine, illustrant la grille de plastique des déchets de découpe ainsi que les doigts longitudinaux du peigne robotisé et en particulier les structures de la face supérieure des doigts longitudinaux soutenant, et éloignant des articles, la grille de plastique des déchets de découpe,
- La figure 11 est une vue partielle latérale de la machine, le peigne robotisé ayant déplacé les articles amenés à la verticale du tapis de convoyage pour les faire reposer sur le tapis de convoyage.
- La figure 12 est une courbe illustrant le cheminement du peigne robotisé dans la direction longitudinale au cours de la mise en œuvre d'un procédé selon l'invention.
- La figure 13 est une courbe illustrant la vitesse selon la direction longitudinale du peigne robotisé pendant le cheminement dudit peigne robotisé au cours de la mise en œuvre d'un procédé selon l'invention.
- La figure 14 est une courbe illustrant le cheminement du peigne robotisé dans la direction verticale au cours de la mise en œuvre d'un procédé selon l'invention,
- La figure 15 est un organigramme de fonctionnement d'un mode de réalisation d'une machine selon l'invention.

Ci-après un exposé détaillé de plusieurs modes de réalisation de l'invention assorti d'exemples et de référence aux dessins.

L'invention est relative au convoyage d'articles A entre différents postes de traitement d'une chaine de production. Les articles A sont typiquement des produits à divers stades de leur production comportant alors au moins un emballage primaire tel qu'un pot en matière plastique, en carton paraffiné ou analogue destiné à être fermé par un opercule. Les pots à divers stades de leur production sont ainsi vides ou bien emplis de contenu ou encore emplis de contenu et fermé, voire emplis de contenu, fermés et suremballés. Tout cela n'est qu'exemplatif et non limitatif et le terme « article » signifie par convention un produit d'une chaîne de production à un stade de sa production.

Dans une réalisation typique, les articles A ont une forme générale cylindrique ou prismatique ou pseudo cylindrique ou pseudo prismatique ou ovoïde ou analogue avec un axe disposé normalement verticalement. Dans une réalisation typique, un tel article A a une longueur axiale de l'ordre de quelques centimètres.

Le procédé peut être mis en œuvre et la machine peut fonctionner à condition de disposer d'un lot entrant L d'articles A.

Un tel lot entrant L comporte une pluralité d'articles A séparés. Dans la présente description, un lot d'articles, notamment un lot entrant L et un lot sortant S comprend au moins un, préférentiellement au moins deux articles A.

Les articles A du lot entrant L peuvent par exemple se présenter sous forme de pots uniques ou de plaquettes individualisées comprenant plusieurs pots côte à côte et attachés les uns aux autres en étant agencés en colonnes et/ou rangées avec entre eux des lignes ou zones frangibles à plus faible résistance. Une plaquette peut comporter deux pots ou quatre pots agencés en deux rangées comprenant chacune deux pots ou encore six pots en deux rangées comprenant chacune trois pots... tout cela n'étant donné qu'à titre exemplatif et non limitatif. Préférentiellement, les articles A du lot entrant L se présentent sous la forme de pots uniques.

En particulier le procédé selon l'invention peut être mis en œuvre et la machine selon l'invention peut être installée en aval, notamment immédiatement en aval ou quasiment immédiatement en aval, d'une ligne ou d'une unité d'élaboration des articles A (thermoformage et découpe des pots, et éventuellement emplissage et fermeture des pots).

Les articles A du lot entrant L sont disposés sur, ou dans, un support de lot entrant 2 de sorte à être alignés selon un plan horizontal H en une ou plusieurs colonnes longitudinales C et/ou une ou plusieurs rangées transversales, perpendiculaire aux colonnes longitudinales.

En aval, un tapis de convoyage 6 évacue les articles A en un lot d'articles sortants S.

Le procédé et la machine selon l'invention visent à ce que les articles A soient également disposés sur le tapis de convoyage de sorte à être alignés selon un plan horizontal H en une ou plusieurs colonnes longitudinales et/ou une ou plusieurs rangées transversales. Plus précisément, le procédé et la machine selon l'invention visent à ce que les articles A du lot d'articles sortants S présentent, dans le plan horizontal H les mêmes orientations relatives et les mêmes positions relatives que les articles du lot entrant L.

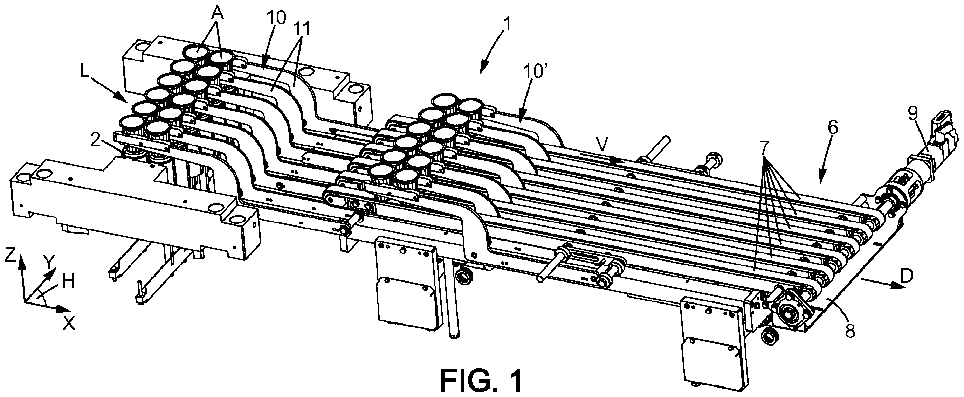

En se référant tout d'abord aux figures 1, 2 et 3, la machine 1 comporte un bâti et des éléments support, appropriés.

Elle s'étend horizontalement selon un plan général horizontal H qui est également un plan du mouvement d'entraînement des parties et organes d'entraînement dont est pourvue la machine, tels que tapis de convoyage ou moyens convoyeur décrits ci-après. La machine 1 peut plus particulièrement s'étendre le long d'une direction longitudinale X du plan horizontal H qui est une direction des flux d'articles A convoyés et en particulier du flux d'articles du lot sortant S.

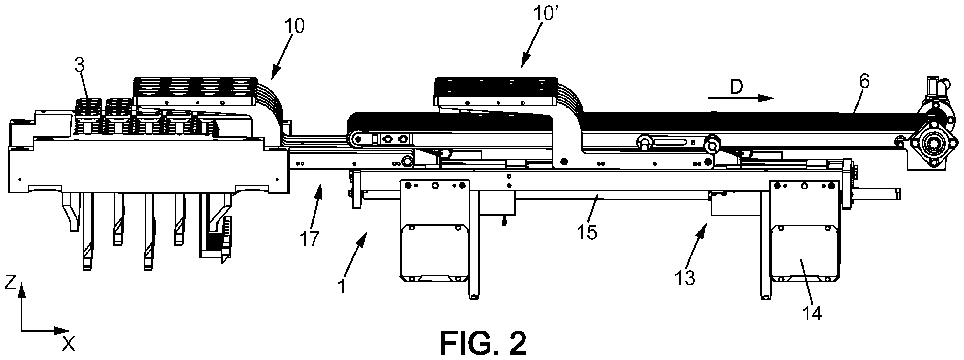

Les moyens de convoyage, notamment le tapis de convoyage, et les flux d'articles A sont ainsi en mouvement le long de la direction longitudinale X dans un sens donné, ce qui permet de définir sur la machine un côté amont (coté gauche sur les figures 1 et 2) et un côté aval (côté droit sur les figures 1 et 2). Par ailleurs, on qualifie de « transversale » une direction Y du plan horizontal H perpendiculaire à la direction longitudinale X.

Enfin, on définit une direction verticale Z, perpendiculaire au plan horizontal H, et donc perpendiculaire à la direction longitudinale X et à la direction transversale Y. Cette direction verticale Z est orientée dans un sens donné, de sorte à définir, pour les éléments de la machine 1 et les articles A, un « dessus » et un « dessous ». Se manière identique, on définit des parties « inférieures » et des parties « supérieures » pour les éléments de la machine 1 et les articles A, en référence à la direction verticale Z et au sens d'orientation de ladite direction verticale Z.

Comme illustré sur les figures 1 à 3, la machine 1 comporte vers l'amont, un support de lot entrant 2 sur, ou dans, lequel sont disposés une pluralité d'articles A séparés d'un lot entrant L d'articles A. Le support de lot entrant 2 est disposé en sortie ou à proximité de la sortie d'une ligne ou d'une unité d'élaboration des articles A partiellement visible sur la figure 1.

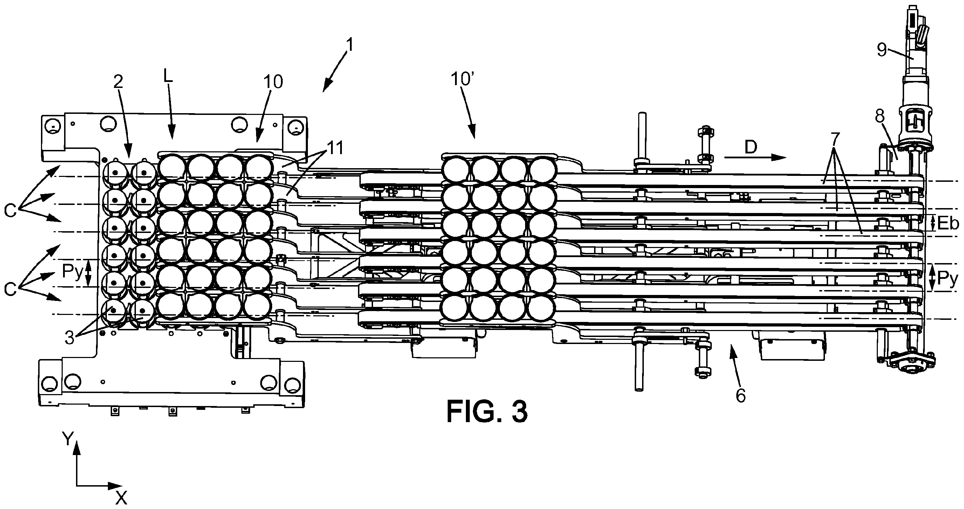

Comme illustré en particulier sur la figure 3, les articles A du lot entrant L sont disposés sur, ou dans, le support de lot entrant 2, en colonnes longitudinales C régulièrement alignées de sorte à présenter un pas transversal Py prédéfini selon la direction transversale Y. Les colonnes longitudinales C sont espacées les unes des autres selon la direction transversale Y par des espacements transversaux de préhension Ey.

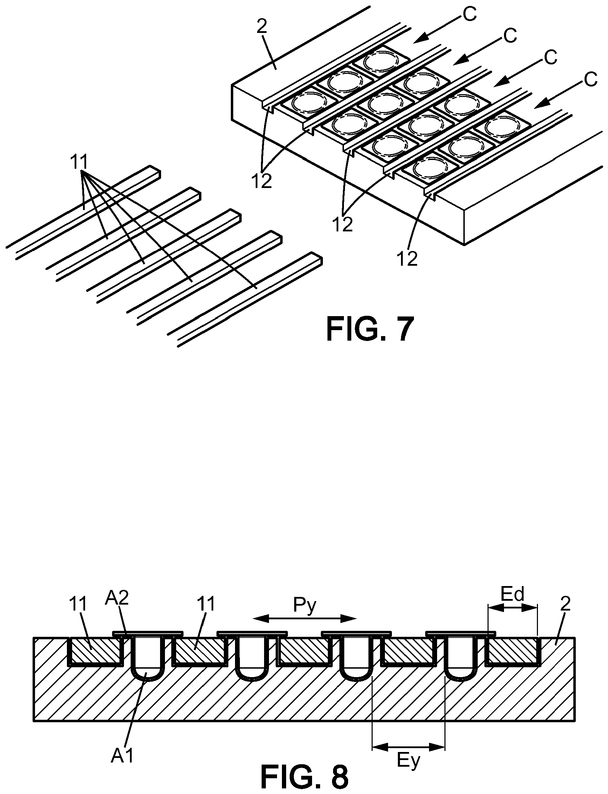

Par « les colonnes longitudinales sont espacées les unes des autres selon la direction transversale par des espacements transversaux de préhension », on entend qu'une portion au moins des articles de chaque colonne longitudinale est espacée d'une portion au moins des articles d'une colonne longitudinale voisine, selon la direction transversale Y, par des espacements transversaux de préhension Ey, illustrés sur la figure 8.

Ainsi en particulier, les articles A peuvent comporter au moins une portion d'extension inférieure A1 et une portion supérieure A2 comme cela est visible sur la figure 8, la portion supérieure A2 étant disposée au-dessus de la portion d'extension inférieure A1 selon la direction verticale Z. La portion supérieure A2 présente un encombrement transversal supérieur à un encombrement transversal de la portion d'extension inférieure A1.

Par « encombrement transversal » d'un élément, on entend une extension maximale dudit élément selon la direction transversale Y.

Ainsi par exemple, les articles A peuvent être des pots comportant un corps constituant la portion d'extension inférieure A1, ledit corps A1 comportant une paroi de fond, une paroi latérale fermée sur elle-même et une fermeture de dessus. Les pots peuvent comporter une collerette, vers la fermeture de dessus, constituant la portion supérieure A2. En variante, les pots peuvent présenter par exemple une forme conique avec une portion d'extension inférieure A1 de plus faible diamètre qu'une portion supérieure A2.

Dans cette réalisation donnée à titre purement exemplaire, les espacements transversaux de préhension Ey entre les colonnes longitudinales C sont ainsi entendus comme des espacements entre les portions d'extension inférieure A1 des articles des colonnes longitudinales C.

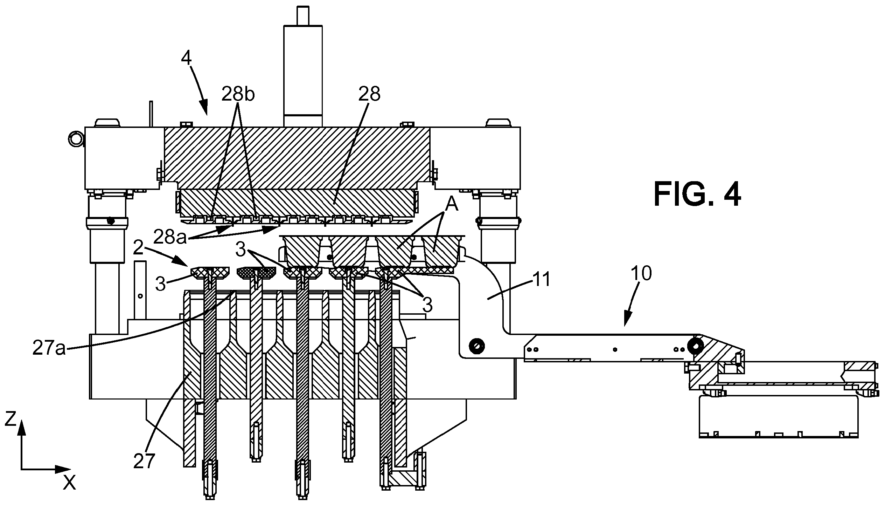

Dans un mode de réalisation illustré en détail sur la figure 4, le support de lot entrant 2 comporte une pluralité de supports de pots 3, séparés, notamment sous la forme d'une pluralité de plateaux sur lesquels sont disposés les articles A du lot entrant, notamment des pots thermoformés.

Les supports de pots 3 sont des éléments d'un outil de découpe 4 d'une chaine de production tel qu'illustré sur la figure 4. L'outil de découpe 4 comporte une matrice inférieure 27 et une partie supérieure 28 aptes chacune à se déplacer selon un axe vertical Z par rapport aux supports de pots 3.

Ainsi, la partie supérieure 28 est apte à descendre par rapport aux supports de pots 3 alors que la matrice inférieure 27 monte par rapport aux supports de pots 3, jusqu'à emprisonner les articles A, portés par les supports de pots 3, et liés par la feuille matériau thermoformée de laquelle sont issus les articles A, pour assurer la coupe et la séparation des articles A de ladite feuille devenant un déchet de découpe.

A cette fin, la matrice inférieure 27 comporte par exemple une pluralité d'ouvertures réparties dans le plan horizontal et formant des cavités aptes à accueillir les supports de pots 3 lorsque la matrice inférieure 27 monte par rapport aux supports de pots 3. La partie supérieure 28 de l'outil de découpe 4 porte des couteaux 28a qui sont arrangés pour venir en regard de rainures 27a pratiquées dans la matrice inférieure aux emplacements de découpe souhaités.de sorte à ce que le matériau des articles A soit pris en sandwich entre les couteaux et les rainures pour être découpé. La partie supérieure 28 peut en outre comporter des dévetisseurs 28b pour faciliter l'extraction des articles A après la découpe.

Selon les modes de réalisation, l'un parmi la matrice inférieure 27, la partie supérieure 28 et les supports de pots 3 peut par exemple être fixe, notamment les supports de pots 3, tandis que les autres, notamment la matrice inférieure 27 et la partie supérieure 28, peuvent se déplacer selon l'axe vertical.

Les supports de pots 3 peuvent être soit fixes, soit animés d'un mouvement vertical descendant permettant d'éloigner la partie supérieure des articles A de la partie supérieure 28 de l'outil de découpe 4 pour faciliter la préhension des articles A sans risque de collision.

De cette manière, on éloigne les articles A des déchets de découpe tels que la grille de plastique et de la partie supérieure 28 de l'outil de découpe.

Lorsque les supports de pots 3 sont mobiles, ils ne sont de telle manière à ne pas modifier la position ni l'orientation des articles A.

Dans ce mode de réalisation, les supports de pots 3 garantissent ainsi un arrangement des articles A du lot entrant L en colonnes longitudinales C tel que détaillé ci-avant.

Vers l'aval, la machine 1 de convoyage comporte un tapis de convoyage 6 visible sur les figures 1 à 3. Le tapis de convoyage 6 s'étend dans le plan horizontal H et présente un déplacement selon une direction de déplacement D du plan horizontal H, par exemple parallèle à la direction longitudinale X.

Le déplacement du tapis de convoyage 6 est réalisé avec une vitesse de déplacement V selon la direction longitudinale X.

La vitesse de déplacement V du tapis de convoyage 6 est connue. La vitesse de déplacement peut être prédéfinie et, notamment, constante. La vitesse de déplacement V peut également être modulée, c'est-à-dire non constante. Dans ce cas, la vitesse de déplacement V est avantageusement mesurée en temps réel par un capteur ou par l'intermédiaire d'un moteur d'entraînement du tapis de convoyage. La vitesse de déplacement V du tapis de convoyage 6 peut notamment être modulée pour gérer l'écartement des articles sur le convoyeur et/ou pour répondre à des contraintes d'asservissement amont et/ou aval de la chaîne de production.

Par « déplacement», on entend que ladite au moins une bande convoyage 7 est entraînée en mouvement avec une vitesse de déplacement V non nulle au moins sur une partie d'une période de fonctionnement de la machine de convoyage. En particulier, comme détaillé ci-après, on entend par là notamment que le tapis de convoyage est entraîné en mouvement avec une vitesse V non nulle au moins lorsque des articles A sont amenés à la verticale dudit tapis de convoyage.

Par « vitesse de déplacement», on entend ainsi une vitesse linéaire de ladite au moins une bande de convoyage 7 du tapis de convoyage, par exemple dans le référentiel du châssis fixe 8 du tapis de convoyage 6.

Le tapis de convoyage 6 comporte au moins une bande convoyage 7 montée sur un châssis fixe 8 et entraînée par un moteur d'entraînement 9. Toutefois, le tapis de convoyage 6 peut avantageusement comporter une pluralité de bandes de convoyages 7 synchronisées comme illustré sur la figure 1 pour accueillir une pluralité de colonnes longitudinales d'articles A comme détaillé ci-après.

Par « synchronisées », on entend que les bandes de convoyages 7 présentent une même direction de déplacement D et une même vitesse de déplacement prédéfinie V selon la direction de déplacement D.

Par extension, on parle de « vitesse de déplacement du tapis de convoyage » en entendant par ceci une vitesse de la, ou des, bande(s) de convoyage 7 du tapis de convoyage 6 par rapport au châssis fixe 8.

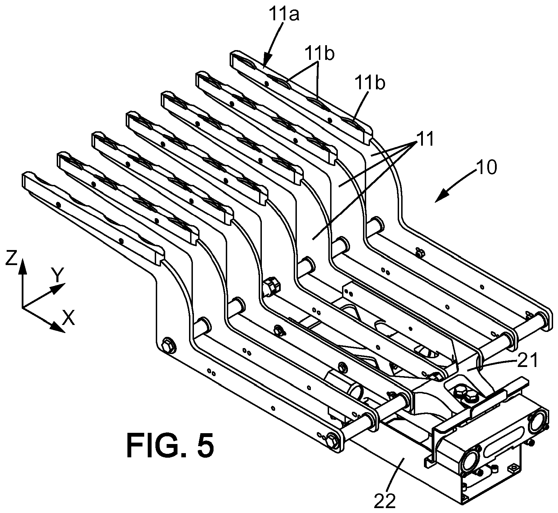

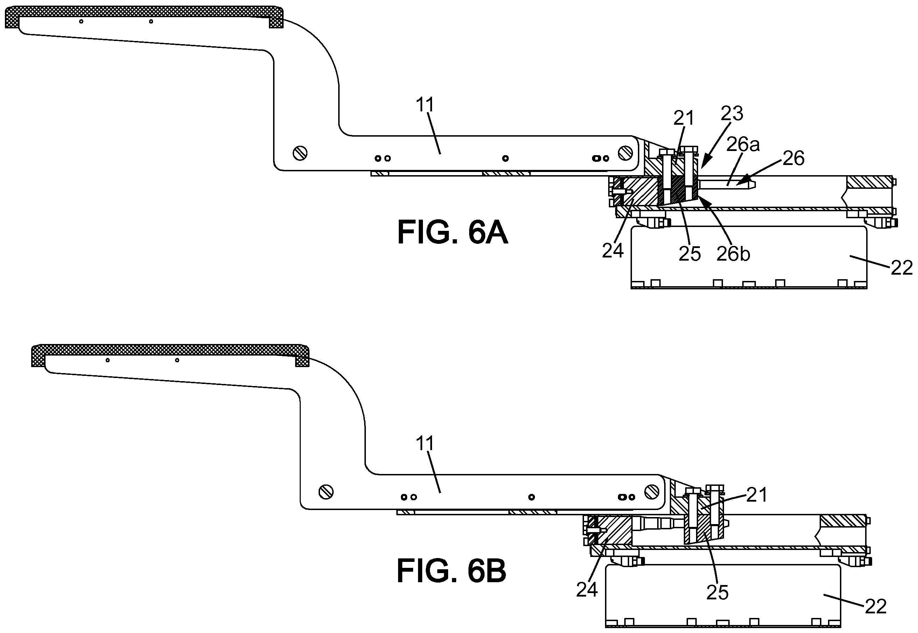

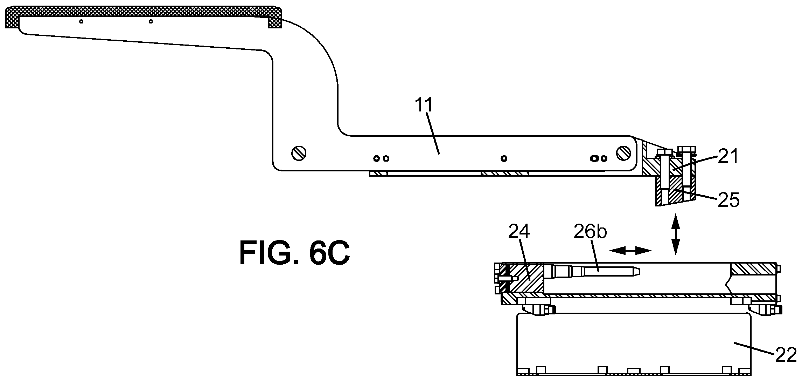

Par ailleurs, la machine de convoyage 1 comporte un peigne robotisé 10 illustré sur les figures 1 à 4 et en détail sur la figure 5 et les figures 6A, 6B, 6C.

Sur les figures 1 à 3, le peigne robotisé 10 est illustré en deux positions différentes lors du fonctionnement de la machine de convoyage, repérées par les références 10 et 10'. Ces deux positions sont détaillées plus loin.

Le peigne robotisé 10 est muni d'une pluralité de doigts longitudinaux 11, s'étendant selon la direction longitudinale X, par exemple de l'aval vers l'amont de la machine de convoyage 1.

Les doigts longitudinaux 11 sont assemblés de manière fixe en un faisceau de doigts longitudinaux par un châssis 21, de sorte à être solidaires et immobiles les uns par rapport aux autres. Le châssis 21 est fixé, de manière immobile, à un corps de peigne 22 par des moyens d'assemblage amovible 23. Le corps de peigne est, quant à lui, solidaire du reste de la machine de convoyage 1, et notamment solidaire de moyens de déplacement 13 du peigne robotisé 10 tels que détaillés plus loin.

Grâce aux moyens d'assemblage amovible 23, il est possible de séparer le châssis 21 portant les doigts longitudinaux 11 du corps de peigne 22, de sorte à échanger aisément le faisceau de doigts longitudinaux 11 par un autre faisceau, neuf et/ou de conformation différente, sans avoir à démonter la machine de convoyage. Ce qui permet d'accroître la flexibilité de la machine dans le cas du convoyage d'articles A de tailles différentes par la même machine.

Dans un mode de réalisation illustré sur les figures 6A, 6B et 6C, les moyens d'assemblage amovible 23 sont des moyens d'assemblage magnétiques. Le châssis 21 est notamment fixé au corps de peigne 22 de manière amovible en réponse à une sollicitation suffisamment importante pour surmonter une force d'attraction magnétique prédéfinie. La figure 6A illustre le fonctionnement normal de la machine de convoyage 1 dans laquelle le châssis 21 est fixé au corps de peigne 22.

Les moyens d'assemblage magnétique comportent un premier élément 24 monté sur le corps de peigne 22 et un second élément 25 monté sur le châssis 21. Le premier élément 24 et le second élément 25 sont tels qu'une force d'attraction magnétique peut exister entre eux lorsque ces éléments sont en proximité. Ainsi par exemple, le premier élément 24 peut comporter un aimant tandis que le second élément 25 comporte une ferrite ou vis-versa. Ladite force d'attraction magnétique peut notamment être suffisamment intense pour solidariser le châssis 21 au corps de peigne 22 en régime normal, c'est-à-dire lorsque les efforts exercées sur le châssis 21 et le corps de peigne 22 ne sont pas top intenses. La force d'attraction magnétique prédéfinie peut ainsi être calibrée par le choix d'un aimant permanent pour le premier élément 24 et/ou le second élément 25, et un réglage d'un entrefer entre le premier élément 24 et le second élément 25, par exemple au moyen de cales pelables.

Ainsi, comme illustré sur la figure 6C, il est possible de séparer le châssis 21 portant les doigts longitudinaux 11 du corps de peigne 22 en exerçant une force suffisante, de sorte à échanger encore plus aisément le faisceau de doigts longitudinaux 11 par un autre faisceau, neuf et/ou de conformation différente, sans avoir à démonter la machine de convoyage. Un tel échange est donc simple et rapide qui permet encore d'accroître la flexibilité de la machine dans le cas du convoyage d'articles A de tailles différentes par la même machine.

Par ailleurs, notamment en cas de choc sur les doigts longitudinaux 11, le châssis 21 portant les doigts longitudinaux 11 peut se séparer corps de peigne 22 sans rupture de pièce mais par une simple séparation du premier élément 24 et du second élément 25, comme illustré sur la figure 6B. Ceci permet d'éviter d'endommager la machine de convoyage.

Pour renforcer l'assemblage du châssis 21 et du corps de peigne 22, des positionneurs 26 peuvent permettre de limiter le déplacement relatif du châssis 21 et du corps de peigne 22 dans la direction verticale lorsque ledit châssis 21 et ledit corps de peigne 22 se trouvent en proximité. De cette manière, il est possible de prévenir un déplacement vertical du peigne robotisé 10 dans l'outil de découpe 4 qui pourrait être dommageable à l'outil de découpe.

Les positionneurs 26 comportent par exemple des tiges 26a s'étendant à partir du corps de peigne 22 sur un certaine distance et étant aptes à traverser des trous 26b pratiqués dans le châssis 21. Ainsi, les tiges 26a peuvent être orientées selon la direction longitudinale X, comme illustré sur la figure 6A, et le châssis 21 et le corps de peigne 22 peuvent être solidarisés par un contact entre le premier élément 24 et le second élément 25 selon un plan perpendiculaire à la direction longitudinale X. Les tiges 26a présentent par exemple une longueur d'au moins 50 mm. Les moyens d'assemblage magnétique réalisent ainsi un dispositif de débrayage permettant que le châssis 21 translate par exemple de 100mm selon un axe horizontal X avant d'être semi-libéré par un guidage avec un jeu plus important. De cette manière, on prévient un dommage de l'outil de découpe lors d'un choc du peigne robotisé 10.

Les doigts longitudinaux 11 sont régulièrement alignés de sorte à présenter un pas transversal prédéfini Py identique au pas transversal des articles A disposés sur, ou dans, le support de lot entrant 2. Les doigts longitudinaux 11 présentent avantageusement, sur au moins une portion active desdits doigts longitudinaux 11, un encombrement transversal de doigt Ed inférieur aux espacements transversaux de préhension Ey séparant les colonnes longitudinales C de sorte à pouvoir être introduits entre les colonnes longitudinales C sans toucher les articles A desdites colonnes longitudinales C.

Le peigne robotisé 10 est par ailleurs arrangé de telle sorte que deux doigts longitudinaux 11 voisins sont aptes à entourer transversalement les articles A d'une colonne longitudinale C et à soutenir les articles A de ladite colonne longitudinale pour les saisir et les amener à la verticale du tapis de convoyage 6.

On se réfère à présent également aux figure 7 et 8 illustrant un mode de réalisation dans lequel le support de lot entrant 2 est formé d'une seule pièce.

Le support de lots entrant 2 comporte une pluralité de rainures longitudinales 12 visibles sur la figure 7 et la figure 8. Les rainures longitudinales 12 sont régulièrement alignées avec un pas transversal prédéfini Py selon la direction transversale Y, notamment identique au pas transversal des articles A disposés sur, ou dans, le support de lot entrant 2.

Comme cela est visible sur la figure 7 et la figure 8, les rainures longitudinales 12 sont suffisamment profondes pour accueillir les doigts longitudinaux 11 du peigne robotisé 10, lorsque les articles A du lot entrant L sont disposés sur, ou dans, le support de lot entrant 2, sans que lesdits doigts longitudinaux 11 n'entrent en contact avec les articles A du lot entrant L. Dans le mode de réalisation des figures 1 à 3, dans lequel le support de lots entrant 2 comporte une pluralité de supports de pots 3, les rainures sont constituées notamment par les espaces séparant les supports de pots.

Pour cela, la machine 1 comporte des moyens de déplacement 13 du peigne robotisé 10, et notamment des doigts longitudinaux 11, selon la direction verticale Z et selon une direction du plan horizontal H, ladite direction du plan horizontal H étant en particulier la direction de déplacement D du tapis de convoyage, et plus particulièrement la direction longitudinale X.

Plus précisément, le peigne robotisé 10 peut par exemple être déplacé selon la direction vertical Z et selon la direction horizontale X, et uniquement celle-ci, en conservant les doigts longitudinaux 11 horizontaux et alignés dans le plan horizontal H.

Ainsi, au cours d'un premier tronçon de cheminement P1-P2 du peigne robotisé 10, les doigts longitudinaux 11 peuvent être introduits dans les rainures longitudinales 12 du support de lots entrant 2 pour entourer transversalement les articles A des colonnes longitudinales C sans que lesdits doigts longitudinaux 11 n'entrent en contact avec les articles A du lot entrant L, comme illustré sur la figure 7 et la figure 8.

A la fin du premier tronçon de cheminement, en P2, le peigne robotisé est alors dans la position repérée par la référence 10 sur les figures 1 à 3.

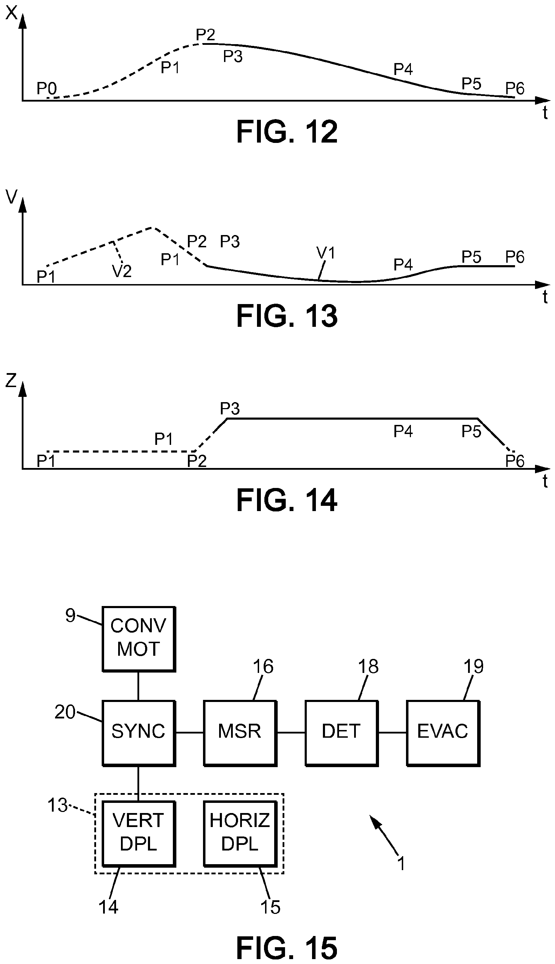

Un tel premier tronçon de cheminement P1-P2 du peigne robotisé 10 appartient ainsi à un tronçon de cheminement inactif du peigne robotisé 10, illustré en traits pointillés sur les figures 12 à 14, c'est-à-dire un tronçon de cheminement sur lequel le peigne robotisé n'assure aucune fonction de portage des articles A.

Avantageusement, lorsque le support de lots entrant 2 est accueilli dans un outil d'une chaine de production, le mouvement du peigne robotisé 10 peut être synchronisé avec ledit outil.

Ainsi par exemple, dans le mode de réalisation de la figure 4, dans lequel le support de lots entrant 2 comporte une pluralité de supports de pots 3 appartenant à un outil de découpe 4 d'une chaine de production, les déplacements selon l'axe vertical de la matrice inférieure 27, la partie supérieure 28 et/ou les supports de pots 3 sont synchronisés avec le déplacement du peigne robotisé de sorte que la matrice inférieure 27 et la partie supérieure 28 soient écartées verticalement des articles A et que lesdits articles puissent être déplacés selon le plan horizontal sans entrer en contact avec la matrice inférieure 27 et la partie supérieure 28.

Puis, dans un deuxième tronçon de cheminement P2-P3 du peigne robotisé 10, les moyens de déplacement 13 montent verticalement le peigne robotisé 10, par rapport au support de lot entrant 2 horizontal, en maintenant le peigne robotisé 10 horizontal, de sorte à venir contacter, et soulever du support de lot entrant 2, les articles A du lot entrant L.

De cette manière, on déplace la pluralité d'articles A du lot entrant L, de manière simultanée, selon la direction verticale Z, en conservant les articles A immobiles par rapport au support de lot entrant 2 dans le plan horizontal H. On déplace le peigne robotisé 10 jusqu'à ce que les articles A ne soient plus en contact avec le support de lot entrant 2 et soient libres d'être déplacés dans le plan horizontal H sans toucher le support de lot entrant 2.

Par « déplacer les articles dans la direction verticale de manière simultanée », on entend que tous les articles A du lot entrant sont déplacés simultanément, c'est-à-dire avec une vitesse relative des articles les uns par rapport aux autres nulle.

Dans le cas où le support de lot entrant 2 comprend des supports de pots 3 et les articles A du lot entrant L sont logés dans des supports de pots 3, les moyens de déplacement 13 du peigne robotisé 10 montent ainsi verticalement les articles A jusqu'à sortir en totalité lesdits articles A des supports de pots 3.

Pour réaliser le déplacement selon la direction verticale Z du peigne robotisé 10, les moyens de déplacement 13 peuvent comporter des moyens 14 aptes à déplacer le peigne robotisé 10 selon la direction vertical Z avec les doigts 11 du peigne horizontaux. Ces moyens 14 comportent par exemple un ensemble à excentriques commandé par un moteur.

Dans un deuxième mode de réalisation de l'invention, pour déplacer la pluralité d'articles A du lot entrant L par rapport au support de lot entrant 2 selon la direction verticale Z en conservant les articles A immobiles par rapport au support de lot entrant dans le plan horizontal H, on abaisse verticalement, par rapport au peigne robotisé 10 horizontal, le support de lot entrant 2 sur, ou dans, lequel sont disposés les articles A, en maintenant ledit support de lot entrant 2 horizontal, de sorte à venir faire reposer les articles A du lot entrant L sur le peigne robotisé 10 et notamment sur les doigts longitudinaux 11 du peigne robotisé 10.

On abaisse alors le support de lot entrant 2 dans la direction verticale Z, sur une course suffisante pour que les articles A ne soient plus en contact avec le support de lot entrant 2 et soient libres d'être déplacés dans le plan horizontal H sans toucher le support de lot entrant 2.

Dans ce deuxième mode de réalisation de l'invention, pour réaliser le déplacement selon la direction verticale Z du support de lot entrant 2, celui-ci peut comporter des moyens de déplacement appropriés, par exemple un vérin, une crémaillère ou encore un ensemble à excentriques commandé par un moteur.

On note que dans les différents modes de réalisation de l'invention, pour déplacer les articles A du lot entrant L, on contacte les articles A uniquement par en-dessous, selon la direction verticale Z. Plus précisément, on peut notamment venir contacter par en dessous la portion supérieure A2 des articles A en entourant transversalement la portion inférieure A1.

Le fait de conserver les articles A immobiles par rapport au support de lot entrant 2 dans le plan horizontal H lors de leur déplacement selon la direction verticale Z permet d'assurer la conservation de l'orientation relative et de la position relative des articles A du lot entrant L. En effet, un mouvement horizontal des articles A en contact avec le support de lot entrant 2 entraînerait un risque important que lesdits articles pivotent sur eux-mêmes et/ou se décalent dans la direction longitudinale X et/ou, éventuellement la direction transversale Y.

De manière générale, dans les différents modes de réalisation de l'invention, on peut commander le déplacement relatif du peigne robotisé et du support de lot entrant de sorte à ce que ceux-ci présentent une vitesse verticale relative inférieure à 200 millimètres par secondes lors d'un contact entre le peigne robotisé et les articles A du lot entrant L. De cette manière, on réduit l'intensité du choc lors du contact entre le peigne robotisé et les articles A et on évite un mouvement intempestif des articles A, par exemple un saut.

Une fois que les articles A ne sont plus en contact avec le support de lot entrant 2 et sont libres d'être déplacés dans le plan horizontal H sans toucher ledit support de lot entrant 2, on amène les articles A saisis à la verticale du tapis de convoyage 6 horizontal, les articles A étant espacés verticalement dudit tapis de convoyage 6 par un espacement vertical prédéfini E.

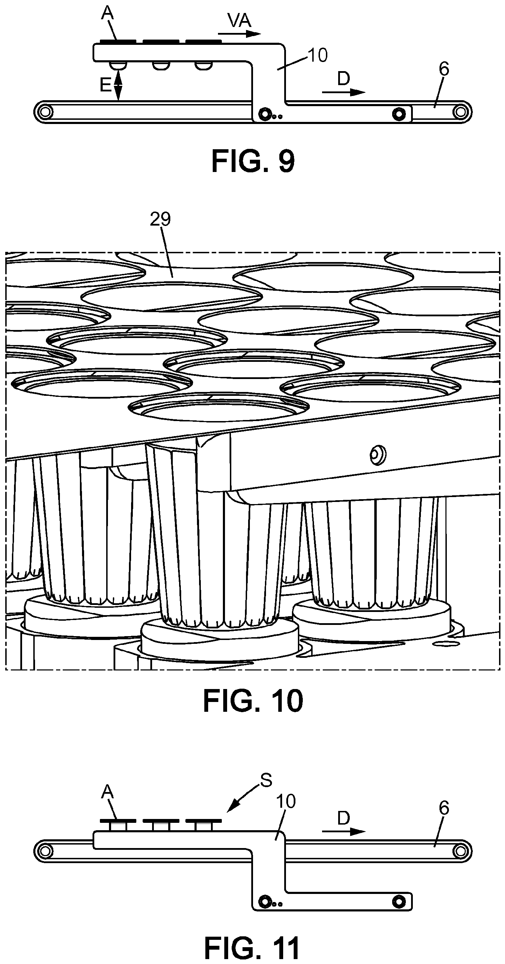

Pour cela, les moyens de déplacement 13 du peigne robotisé 10 déplacent le peigne robotisé 10 sur un troisième tronçon de cheminement P3-P4, pour amener les articles A à la verticale du tapis de convoyage 6 comme illustré sur la figure 9.

A la fin du troisième tronçon de cheminement, en P4, le peigne robotisé est alors dans la position repérée par la référence 10' sur les figures 1 à 3.

Le troisième tronçon de cheminement P3-P4 est un tronçon de cheminement actif, c'est-à-dire que les articles A sont disposés sur le peigne robotisé 10, illustré en traits continus sur les figures 12 à 14. Les articles A sont en particulier soutenus uniquement par le peigne robotisé 10.

Le déplacement du peigne robotisé 10 sur le troisième tronçon de cheminement peut être uniquement un déplacement dans le plan horizontal H, notamment un déplacement selon la direction longitudinale X. A cette fin, les moyens de déplacement 13 du peigne robotisé 10 peuvent comporter des moyens 15 aptes à déplacer le peigne robotisé 10 selon la direction longitudinale X, par exemple un moteur linéaire, notamment un moteur linéaire sous forme de vérin magnétique.

Dans un mode de réalisation de l'invention, les moyens 14 aptes à déplacer le peigne robotisé 10 selon la direction vertical Z et les moyens 15 aptes à déplacer le peigne robotisé 10 selon la direction longitudinale X peuvent être couplés et synchronisés de sorte à compenser une dérive de l'un des moyens 14, 15 par un déplacement de l'autre des moyens 14, 15.

Dans un mode de réalisation de l'invention, les doigts longitudinaux 11 du peigne robotisé 10 présentent chacun une face supérieure 11a munie d'une pluralité de structures 11b, par exemple des encoches ou des structures en surépaisseur. Les structures 11b sont par exemple réparties le long de la direction longitudinale X des doigts longitudinaux 11 et aptes à caler dans le plan horizontal H les articles A saisis lors du mouvement du peigne robotisé 10 dans le plan horizontal H.

Dans le mode de réalisation dans lequel le support de lot entrant 2 est apte à être accueillit dans un outil de découpe 4, les structures 11b de la face supérieure 11a peuvent être adaptées pour soutenir, et éloigner des articles A, des déchets de découpe tels que la grille de plastique, notamment lorsque les articles A sont saisis par le peigne robotisé 10 et amenés à la verticale du tapis de convoyage 6.

En se référant à la figure 15, dans un mode de réalisation de l'invention, alors qu'on amène les articles A saisis à la verticale du tapis de convoyage 6, on mesure au moins une caractéristique physique des articles A saisis par des moyens de mesure 16 de ladite au moins une caractéristique physique.

La caractéristique physique des articles A peut par exemple être un poids des articles, une mesure optique de la surface extérieure des articles, une mesure de la présence ou de l'absence d'une portion des articles A. Les moyens de mesure 16 peuvent ainsi être un capteur optique, un capteur de force, un capteur magnétique ou autre, selon la caractéristique physique mesurée.

A partir de la caractéristique physique mesurée, des moyens de détermination 18 peuvent alors déterminer la présence ou l'absence d'articles défectueux parmi les articles saisis. Si on détermine la présence d'articles défectueux parmi les articles saisis A, on peut notamment évacuer les articles A saisis par des moyens d'évacuation d'articles détectés défectueux 19..

Les moyens d'évacuation d'articles détectés défectueux 19 peuvent être disposés en aval de la machine de convoyage 1 et comporter une machine de préhension apte à saisir les articles défectueux du lot d'articles sortants S, ceux-ci étant repérés par leur position horizontale par rapport au tapis de convoyage 6 telle que détaillé ci-après.

En variante, untrou d'évacuation 17 peut par exemple être agencé, dans le plan horizontal, entre le tapis de convoyage 6 et le support de lot entrant 2 comme illustré sur les figures 1 et 2. Un bac de récupération peut être placé dans le trou d'évacuation 17 pour récupérer les articles évacués par le trou d'évacuation 17. Des moyens d'évacuation d'articles détectés défectueux 19 peuvent être apte à évacuer, par le trou d'évacuation 17, les d'articles détectés défectueux, ou notamment l'ensemble des articles A saisis lorsqu'est déterminée la présence d'articles défectueux parmi les articles saisis A.

Ainsi pour cela, les moyens de déplacement 13 du peigne robotisé 10 peuvent par exemple positionner le peigne robotisé 10 de sorte à ce que l'extrémité amont du peigne robotisé 10 soient placée au-dessus du trou d'évacuation 17, le cas échéant proche de l'extrémité aval du trou d'évacuation 17. Puis, les moyens d'évacuation d'articles détectés défectueux 19 peuvent venir balayer les articles A placés sur le peigne robotisé 10pour les faire tomber dans le trou d'évacuation 17.

Par ailleurs, la machine 1 comporte en outre, notamment vers l'aval, des moyens de réglage et de synchronisation 20 indiqués sur la figure 15. Les moyens de réglage et de synchronisation 20 sont apte à commander les moyens de déplacement 13 du peigne robotisé 10. Les moyens de réglage et de synchronisation 20 comportent par exemple une carte électronique et/ou un micro-ordinateur ou microcontrôleur et/ou des capteurs de vitesse de déplacement du tapis de convoyage.

Plus précisément, les moyens de réglage et de synchronisation 20 sont apte, les articles A saisis étant à la verticale du tapis de convoyage 6, à régler et synchroniser avec la vitesse de déplacement V du tapis de convoyage 6 un déplacement horizontal Va des articles A amenés à la verticale du tapis de convoyage.

En effet, le tapis de convoyage 6 est tel que, lorsque les articles A saisis sont à la verticale du tapis de convoyage 6, ledit tapis de convoyage se déplace avec une vitesse de déplacement V.

Par « régler et synchroniser avec la vitesse de déplacement du tapis de convoyage un déplacement horizontal des articles », on entend ainsi ajuster la direction et la vitesse, dans le plan horizontal, des articles pour qu'elles soient identique à la vitesse et à la direction de déplacement du tapis de convoyage, de sorte à ce que les articles soient immobiles par rapport au tapis de convoyage dans le plan horizontal.

A cette fin les moyens de réglage et de synchronisation 20 peuvent être reliés en outre au moteur d'entraînement 9 du tapis de convoyage 6, ou à un capteur de vitesse de déplacement du tapis de convoyage 6, de sorte à permettre un ajustement fin de la vitesse de déplacement des articles A saisis, c'est-à-dire de la vitesse de déplacement du peigne robotisé 10, avec la vitesse de déplacement du tapis de convoyage 6.

On comprend donc que le peigne robotisé 10 est alors déplacé sur un quatrième tronçon de cheminement P4-P5, appartenant au tronçon de cheminement actif, et dans lequel la vitesse de déplacement dans le plan horizontal H du peigne robotisé 10 est synchronisée avec la vitesse de déplacement V du tapis de convoyage.

Par ailleurs, lorsqu'on règle et on synchronise le déplacement horizontal des articles A avec la vitesse de déplacement V du tapis de convoyage 6, on peut en outre définir une position horizontale des articles A du lot d'articles sortants S par rapport au tapis de convoyage 6, en particulier une position horizontal définie selon la direction de déplacement D du tapis de convoyage.

On entend ici par « définir une position horizontale », soit que l'on impose une position horizontale prédéfinie aux articles A par rapport au tapis de convoyage 6, soit que l'on repère et mémorise la position horizontale des articles A par rapport au tapis de convoyage 6. La position horizontale des articles A du lot d'articles sortants S par rapport au tapis de convoyage 6 et ainsi connue, ce qui facilite notamment les opérations de la chaîne de production situées en aval de la machine ou du procédé de convoyage.

Il est notamment particulièrement intéressant d'avoir une position horizontale définie des articles A du lot d'articles sortants S par rapport au tapis de convoyage 6 lorsque la vitesse de déplacement V du tapis de convoyage est non constante. Dans ce cas, il est alors aisé de repérer les articles A en aval de la machine de convoyage ce qui simplifie les opérations avales de la chaine de production.

Une fois la vitesse de déplacement dans le plan horizontal H du peigne robotisé 10 synchronisée avec la vitesse de déplacement du tapis de convoyage, les moyens de déplacement 13 du peigne robotisé 10 sont alors mis en œuvre pour déplacer les articles A dans la direction verticale Z, de manière simultanée, pour amener les articles A à reposer sur le tapis de convoyage 6.

Pour cela, le peigne robotisé 10 est déplacé sur un cinquième tronçon de cheminement P5-P6 appartenant à un tronçon de cheminement actif. Le peigne robotisé 10 est abaissé verticalement dans la direction verticale Z, par rapport au tapis de convoyage 6 fixe, par les moyens 14 aptes à déplacer le peigne robotisé 10 selon la direction vertical Z, tout en conservant le déplacement horizontal des articles A synchronisé avec la vitesse de déplacement V du tapis de convoyage 6 grâce aux moyens 15 contrôlant le peigne robotisé 10 selon la direction longitudinale X.

Le peigne robotisé 10 est abaissé verticalement d'une telle manière sur une course suffisante pour amener les articles A à reposer sur le tapis de convoyage 6 comme illustré sur la figure 11. Ainsi en particulier, les moyens 14 aptes à déplacer le peigne robotisé 10 selon la direction vertical Z peuvent abaisser verticalement le peigne robotisé 10, par rapport au tapis de convoyage 6, sur une course verticale supérieure à l'espacement vertical prédéfini E, de sorte à ce que les articles A perdent contact avec le peigne robotisé 10 à la fin de ladite course verticale, notamment perdent le contact avec le peigne robotisé 10 par un mouvement relatif des articles et du peigne robotisé 10 ayant uniquement une composante verticale.

De cette manière, les articles A sont ainsi déposés sur le tapis de convoyage 6 avec une vitesse horizontale nulle relativement au tapis de convoyage 6 et avec vitesse horizontale nulle relativement au peigne robotisé 10. Ici également, le fait de conserver les articles A immobiles, par rapport au tapis de convoyage 6 et au peigne robotisé 10, dans le plan horizontal H, lors de leur déplacement selon la direction verticale Z permet d'assurer la conservation de l'orientation relative et de la position relative des articles A. En effet, un mouvement horizontal des articles A en contact avec le tapis de convoyage 6 et/ou en contact avec le peigne robotisé 10 entraînerait un risque élevé que lesdits articles pivotent sur eux-mêmes et/ou se décalent dans la direction longitudinale X et/ou, éventuellement la direction transversale Y.

De cette manière, les articles du lot d'articles sortants S présentent avantageusement, dans le plan horizontal H, les mêmes orientations relatives et les mêmes positions relatives que les articles du lot entrant L. Il n'est ainsi pas nécessaire de repositionner les articles A ultérieurement dans la chaîne de production.

Pour permettre ledit mouvement du peigne robotisé 10 sur une course verticale supérieure à l'espacement vertical prédéfini E, le tapis de convoyage peuvent avantageusement comporter une pluralité de bandes de convoyage 7, comme indiqué ci-avant. Chaque bande de convoyage 7 peut être associée à une unique colonne longitudinal C d'articles A, saisie et soutenue entre deux doigts longitudinaux 11 voisins du peigne 10.

Les bandes de convoyages 7 peuvent être alignées avec un pas transversal prédéfini Py selon la direction transversale Y, identique au pas transversal des doigts longitudinaux 11 et donc notamment identique au pas transversal des articles A disposés sur, ou dans, le support de lot entrant 2. Les bandes de convoyages 7 peuvent être espacées les unes des autres selon la direction transversale Y par des espacements transversaux de bandes Eb. Les espacements transversaux de bandes Eb présentent avantageusement une largeur, selon la direction transversale Y, supérieure aux encombrements transversaux respectifs des doigts Ed. De cette manière, les espacements transversaux de bandes Eb sont aptes à accueillir les doigts longitudinaux 11 du peigne robotisé 10. Ceci permet notamment aux doigts longitudinaux 11 du peigne robotisé 10 de s'abaisser sous le niveau des bandes de convoyage 7 du tapis de convoyage 6.

Une fois que le peigne robotisé 10 n'est plus en contact avec les articles A, ceux-ci sont alors déplacés par le tapis de convoyage 6 et sont évacués en un lot d'articles sortants S, notamment par un mouvement de translation dans la direction de déplacement du tapis de convoyage comme illustré sur la figure 11.

Par ailleurs, les doigts longitudinaux 11 du peigne robotisé 10 peuvent présenter une fonction de guidage supplémentaire. Ainsi, lorsque les articles A sont évacués en un lot d'articles sortants S au moyen du tapis de convoyage 6, les colonnes longitudinales C formées par les articles A sont guidées sur le tapis de convoyage 6 au moyen des doigts longitudinaux 11 du peigne robotisé 10 entourant transversalement les articles A. Les doigts longitudinaux 11 sont ainsi aptes à guider les articles A dans la direction de déplacement D du plan horizontal H lors du début de l'évacuation des articles A sur le tapis de convoyage 6.

Enfin, lors d'un sixième tronçon de cheminement P0-P1 le peigne robotisé est déplacé dans le plan horizontal H selon la direction longitudinale X pour être ramené de l'aval vers l'amont, notamment au moyen des moyens 15 aptes à déplacer le peigne robotisé 10 selon la direction longitudinale X.

Le sixième tronçon de cheminement appartient ainsi à un tronçon de cheminement inactif du peigne robotisé 10, illustré en traits pointillés sur les figures 12 à 14, c'est-à-dire un tronçon de cheminement sur lequel le peigne robotisé n'assure aucune fonction de portage des articles A.

Ainsi, sur les différents tronçons de cheminement, le peigne robotisé est déplacé au moins en partie par les moyens 15 aptes à déplacer le peigne robotisé 10 selon la direction longitudinale X. Le peigne robotisé peut ainsi être déplacé sur un tronçon de cheminement actif avec une première vitesse de déplacement V1 dans le plan horizontal H, ledit tronçon de cheminement actif comportant par exemple le troisième tronçon de cheminement P3-P4 et/ou le quatrième tronçon de cheminement P4-P5 décrit ci-avant. Le peigne robotisé peut par ailleurs être déplacé sur un tronçon de cheminement inactif de retour avec une seconde vitesse de déplacement V2 dans le plan horizontal, par exemple sur le sixième tronçon P0-P1 de cheminement décrit ci-avant.

De manière avantageuse, comme illustré sur la figure 13, la seconde vitesse de déplacement peut être supérieure à la première vitesse de déplacement. De cette manière, on peut éviter un débordement d'un contenu des articles, à l'extérieur ou sous forme d'une bavure sur l'envers de l'opercule, tout en conservant une cadence importante de convoyage d'articles A.

Par ailleurs, de manière avantageuse, la vitesse de déplacement du peigne robotisé sur le troisième tronçon de cheminement P3-P4 peut être supérieure à la vitesse de déplacement V du tapis de convoyage 6. De cette manière, on diminue la vitesse de déplacement du peigne robotisé pour la synchronisé avec la vitesse de déplacement du tapis de convoyage sur le quatrième tronçon de cheminement P4-P5.

Dans un mode de réalisation de l'invention, on réitère les étapes du procédé, et donc le cheminement du peigne robotisé décrit ci-avant une pluralité de fois. En particulier, on peut synchroniser un ou plusieurs éléments parmi : le cheminement du peigne robotisé 10, l'arrivée des lots entrants L d'articles, le pas longitudinale Px des rangées d'articles A des lots entrants L et la vitesse de déplacement V du tapis de convoyage 6 ; de sorte à assurer, sur le tapis de convoyage 6, un flux d'articles A sortant comportant des rangées d'articles A, transversales à la direction de déplacement D du tapis de convoyage 6, régulièrement espacées par un pas d'espacement longitudinal prédéfini.

Le pas d'espacement longitudinal prédéfini espaçant les rangées d'articles A du flux d'articles A sortant peut être constant ou être modulé pour gérer l'écartement des articles sur le convoyeur et/ou pour répondre à des contraintes d'asservissement amont et/ou aval de la chaîne de production.

Le peigne robotisé 10 parcourt alors une pluralité de fois le cheminement fermé P0-P6 détaillé ci-avant.

De cette manière on obtient un flux régulier d'articles A sur le tapis de convoyage 6 ce qui simplifie encore davantage l'identification des positions des articles A en aval de la machine de convoyage sur la chaîne de production. Par ailleurs, on peut avoir une position horizontale définie des articles A du lot d'articles sortants S par rapport au tapis de convoyage 6, ce qui facilite la gestion aval des articles A du lot sortant, notamment dans le cas où la vitesse de déplacement V du tapis de convoyage 6 est non constante.

## Revendications

1. Procédé de convoyage d'articles (A) dans une chaîne de production, dans lequel,
- on dispose d'un lot entrant (L) d'articles (A) comportant une pluralité d'articles (A) séparés, disposés sur, ou dans, un support de lot entrant (2) de sorte à être alignés selon un plan horizontal (H) en une ou plusieurs colonnes longitudinales (C) et/ou une ou plusieurs rangées transversales,
- on déplace la pluralité d'articles (A) du lot entrant (L) par rapport au support de lot entrant (2), de manière simultanée, selon une direction verticale (Z) perpendiculaire au plan horizontal (H), en conservant les articles (A) immobiles par rapport au support de lot entrant (2) dans le plan horizontal (H), de sorte à ce que les articles (A) ne soient plus en contact avec le support de lot entrant (2) et soient libres d'être déplacés dans le plan horizontal (H) sans toucher le support de lot entrant (2),
- on amène les articles (A) saisis à la verticale d'un tapis de convoyage (6) horizontal, les articles (A) étant espacés verticalement dudit tapis de convoyage (6) par un espacement vertical prédéfini (E),
- puis, on déplace les articles (A) dans la direction verticale (Z), de manière simultanée, pour amener les articles (A) à reposer sur le tapis de convoyage (6),
- on évacue les articles (A) en un lot d'articles sortants (S) au moyen du tapis de convoyage (6),
**caractérisé en ce que** :
- lorsque les articles (A) sont amenés à la verticale du tapis de convoyage (6), le tapis de convoyage (6) présente un déplacement selon une direction de déplacement (D) du plan horizontal (H) avec une vitesse de déplacement (V),
- les articles (A) saisis étant à la verticale du tapis de convoyage (6), on règle et on synchronise avec ladite vitesse de déplacement (V) du tapis de convoyage (6) un déplacement horizontal des articles (A), et
- on déplace les articles (A) dans la direction verticale (Z) pour amener les articles (A) à reposer sur le tapis de convoyage (6) en conservant le déplacement horizontal des articles (A) synchronisé avec la vitesse de déplacement (V) du tapis de convoyage (6).

2. Procédé selon la revendication 1, **caractérisé par le fait que** les articles (A) du lot entrant (L) sont disposés, sur, ou dans, le support de lot entrant (2), en colonnes longitudinales (C) régulièrement alignées de sorte à présenter un pas transversal (Py) prédéfini selon une direction transversale (Y) du plan horizontal (H), et à être espacées les unes des autres selon ladite direction transversale (Y) par des espacements transversaux de préhension (Ey).

3. Procédé selon la revendication 2, **caractérisé par le fait que** pour déplacer la pluralité d'articles (A) du lot entrant (L), de manière simultanée, selon la direction verticale (Z), on vient introduire dans les espacements transversaux de préhension (Ey) du lot entrant (L) des doigts longitudinaux (11) d'un peigne robotisé (10), lesdits doigts longitudinaux (11) étant régulièrement alignés de sorte à présenter ledit pas transversal prédéfini (Py), et étant agencés de telle sorte que deux doigts longitudinaux (11) voisins sont aptes à entourer transversalement les articles (A) d'une colonne longitudinale (C) d'articles du lot entrant (L) et à soutenir les articles (A) de ladite colonne longitudinale (C) pour les saisir et les amener à la verticale du tapis de convoyage (6), et/ou on déplace le peigne robotisé (10) uniquement selon la direction verticale (Z) et selon une direction horizontale (X), la direction horizontale (X) étant en particulier la direction de déplacement (D) du tapis de convoyage (6), et/ou
on déplace le peigne robotisé (10),
- sur un tronçon de cheminement actif pour amener les articles (A) à la verticale du tapis de convoyage (6), avec une première vitesse de déplacement (V1) dans le plan horizontal (H), et
- sur un tronçon de cheminement inactif de retour, dans lequel le peigne robotisé (10) n'assure aucune fonction de portage des articles (A), avec une seconde vitesse de déplacement (V2) dans le plan horizontal (H) supérieure à la première vitesse de déplacement (V1).

4. Procédé selon l'une quelconque des revendications 1 à 3, **caractérisé par** le fait l'on contacte les articles (A) uniquement par en-dessous, selon une direction verticale (Z),
en particulier dans lequel les articles (A) comportent au moins une portion d'extension inférieure (A1) et une portion supérieure (A2), la portion supérieure (A2) présentant un encombrement transversal supérieur à un encombrement transversal de la portion d'extension inférieure (A1), et que, pour déplacer les articles (A) du lot entrant (L) selon une direction verticale (Z), on vient contacter par en dessous la portion supérieure (A2) en entourant transversalement la portion inférieure (A1),
en particulier dans lequel les articles (A) sont du type comportant un corps avec une paroi de fond, une paroi latérale fermée sur elle-même et une fermeture de dessus, ainsi qu'une collerette vers la fermeture de dessus, ledit corps constituant la portion d'extension inférieure (A1), ladite collerette constituant la portion supérieure (A2).

5. Procédé selon l'une quelconque des revendications 1 à 4, **caractérisé par le fait que**, pour déplacer les articles (A) du lot entrant (L) selon une direction verticale (Z), on monte verticalement un peigne robotisé (10), par rapport au support de lot entrant (2) horizontal, en maintenant le peigne robotisé (10) horizontal, de sorte à venir contacter, et soulever du support de lot entrant (2), les articles (A) du lot entrant (L), et/ou on abaisse verticalement, par rapport à un peigne robotisé (10) horizontal, le support de lot entrant (2) sur, ou dans, lequel sont disposés les articles (A), en maintenant ledit support de lot entrant (2) horizontal, de sorte à venir faire reposer les articles (A) du lot entrant (L) sur le peigne robotisé (10),
en particulier on déplace un peigne robotisé (10) et/ou le support de lot entrant (2) de sorte à ce que le peigne robotisé (10) et le support de lot entrant (2) présentent une vitesse verticale relative inférieure à 200 millimètres par secondes lors d'un contact entre le peigne robotisé (10) et les articles (A) du lot entrant (L).

6. Procédé selon l'une quelconque des revendications 1 à 5, **caractérisé par le fait que**, pour déplacer les articles (A) dans la direction verticale (Z) pour amener les articles (A) à reposer sur le tapis de convoyage (6), on abaisse verticalement un peigne robotisé (10), par rapport au tapis de convoyage (6) fixe, de sorte à venir faire reposer les articles (A) sur le tapis de convoyage (6),
en particulier dans lequel, pour amener les articles (A) à reposer sur le tapis de convoyage (6) on abaisse verticalement le peigne robotisé (10) par rapport au tapis de convoyage (6) sur une course verticale supérieure à l'espacement vertical prédéfini (E), de sorte à ce que les articles (A) perdent contact avec le peigne robotisé (10) à la fin de ladite course verticale.

7. Procédé selon l'une quelconque des revendications 1 à 6, **caractérisé par le fait que** pour évacuer les articles (A) en un lot d'articles sortants (S) au moyen du tapis de convoyage (6), on guide les articles (A) sur le tapis de convoyage (6) dans la direction de déplacement (D) du plan horizontal (H), notamment au moyen de doigts longitudinaux (11) d'un peigne robotisé (10) entourant transversalement les articles (A).

8. Procédé selon l'une quelconque des revendications 1 à 7, **caractérisé par le fait que**, alors qu'on amène les articles (A) saisis à la verticale du tapis de convoyage (6),
on mesure au moins une caractéristique physique des articles (A) saisis, en particulier:
- on détermine la présence ou l'absence d'articles défectueux parmi les articles (A) saisis, à partir de la caractéristique physique mesurée, et
- si on détermine la présence d'articles défectueux parmi les articles (A) saisis, on évacue les articles (A) saisis et/ou
on écarte verticalement desdits articles (A) des déchets de découpe d'articles pour que lesdits déchets de découpe d'articles n'entrent pas en contact avec les articles (A) saisis.

9. Procédé selon l'une quelconque des revendications 1 à 8, **caractérisé par le fait que**, les articles (A) du lot d'articles sortants (S) présentent, dans le plan horizontal (H), les mêmes orientations relatives et les mêmes positions relatives que les articles du lot entrant (L) et/ou,
lorsqu'on règle et on synchronise avec la vitesse de déplacement (V) du tapis de convoyage (6) un déplacement horizontal des articles (A), on définit une position horizontale des articles (A) du lot d'articles sortants (S) par rapport au tapis de convoyage (6), en particulier une position horizontal selon la direction de déplacement (D) du tapis de convoyage.

10. Machine de convoyage d'articles (A) dans une chaîne de production, pour la mise en œuvre du procédé selon l'une quelconque des revendications 1 à 9, qui comporte :
- vers l'amont, un support de lot entrant (2) sur, ou dans, lequel sont disposés une pluralité d'articles (A) séparés d'un lot entrant (L) d'articles (A) de sorte à être alignés selon un plan horizontal (H) en une ou plusieurs colonnes longitudinales (C) et/ou une ou plusieurs rangées transversales,
- vers l'aval, un tapis de convoyage (6) horizontal pour évacuer les articles (A) en un lot d'articles sortants (S),
- vers l'amont, des moyens (10, 13) pour déplacer la pluralité d'articles (A) du lot entrant (L), de manière simultanée, selon une direction verticale (Z) perpendiculaire au plan horizontal (H), en conservant les articles (A) immobiles par rapport au support de lot entrant (2) dans le plan horizontal (H), de sorte à ce que les articles (A) ne soient plus en contact avec le support de lot entrant (2) et soient libres d'être déplacés dans le plan horizontal (H) sans toucher le support de lot entrant (2),
- vers l'aval, des moyens (10, 13) pour amener les articles (A) saisis à la verticale du tapis de convoyage (6), les articles (A) étant espacés verticalement dudit tapis de convoyage (6) par un espacement vertical prédéfini (E),
- vers l'aval, des moyens (10, 13) pour déplacer les articles (A) dans la direction verticale (Z), de manière simultanée, pour amener les articles (A) à reposer sur le tapis de convoyage (6),
**caractérisé en ce que**
- le tapis de convoyage (6) présente un déplacement selon une direction de déplacement (D) du plan horizontal (H) avec une vitesse de déplacement (V) au moins lorsque les articles (A) sont amenés à la verticale du tapis de convoyage (6),
- la machine comporte en outre vers l'aval, des moyens de réglage et de synchronisation (20) avec la vitesse de déplacement (V) du tapis de convoyage, d'un déplacement horizontal des articles (A) amenés à la verticale du tapis de convoyage (6), et
- les moyens (10, 13) pour déplacer les articles (A) dans la direction verticale (Z) pour amener les articles (A) à reposer sur le tapis de convoyage (6) sont apte à déplacer lesdits articles (A) dans la direction verticale (Z) en conservant le déplacement horizontal des articles (A) synchronisé avec la vitesse de déplacement (V) du tapis de convoyage (6).

11. Machine selon la revendication 10, **caractérisée par le fait que** les moyens (10, 13) pour amener les articles (A) saisis à la verticale du tapis de convoyage (6), comportent un peigne robotisé (10) et des moyens de déplacement (13) du peigne robotisé (10),
plus particulièrement dans laquelle le peigne robotisé (10) est muni de doigts longitudinaux (11) régulièrement alignés de sorte à présenter un pas transversal (Py) prédéfini selon une direction transversale (Y) du plan horizontal (H) perpendiculaire à la direction de déplacement (D) du tapis de convoyage (6), et agencés de telle sorte que deux doigts longitudinaux (11) voisins sont aptes à entourer transversalement les articles (A) d'une colonne longitudinale (C) d'articles du lot entrant (L) et à soutenir les articles (A) de ladite colonne longitudinale (C) pour les saisir et les amener à la verticale du tapis de convoyage,
en particulier dans laquelle les doigts longitudinaux (11) du peigne robotisé (10) présentent chacun une face supérieure (11a) munie d'une pluralité de structures (11b), réparties le long de la direction longitudinale (X) des doigts longitudinaux (11),
en particulier dans laquelle le peigne robotisé (10) comprend un châssis (21) sur lequel sont montés les doigts longitudinaux (11) et un corps de peigne (22) solidaire des moyens de déplacement (13), le châssis (21) et le corps de peigne (22) étant fixés ensemble par des moyens d'assemblage amovible (23), notamment dans laquelle les moyens d'assemblage amovible (23) sont des moyens d'assemblage magnétique comprenant un premier élément (24) monté sur le corps de peigne (22) et un second élément (25) monté sur le châssis (21), les moyens d'assemblage amovible (23) étant adaptés pour fixer le châssis (21) sur le corps de peigne (22) de manière amovible en réponse à une sollicitation suffisamment importante pour surmonter une force d'attraction magnétique prédéfinie entre le premier élément (24) et le second élément (25).

12. Machine selon la revendication 11, **caractérisée par le fait que** le support de lot entrant (2) comporte une pluralité de rainures longitudinales (12) régulièrement alignées avec un pas transversal prédéfini (Py) selon une direction transversale (Y) du plan horizontal (H) perpendiculaire à la direction de déplacement (D) du tapis de convoyage (6), lesdites rainures longitudinales (12) étant aptes à accueillir les doigts longitudinaux (11) du peigne robotisé (10).

13. Machine selon l'une quelconque des revendications 11 et 12, **caractérisée par le fait que** le tapis de convoyage (6) comporte une pluralité de bandes de convoyages (7), synchronisées, alignées avec un pas transversal (Py) prédéfini selon la direction transversale (Y) perpendiculaire à la direction de déplacement (D) du tapis de convoyage (6), et espacées les unes des autres selon la direction transversale (Y) par des espacements transversaux de bandes (Eb) aptes à accueillir les doigts longitudinaux (11) du peigne robotisé (10).

14. Machine selon l'une quelconque des revendications 11 à 13, **caractérisée par le fait que** les moyens de déplacement (13) comportent
des moyens (15) de déplacement du peigne robotisé (10) selon une direction horizontale (X) contrôlés par les moyens de réglage et de synchronisation (20) avec la vitesse de déplacement (V) du tapis de convoyage (6), lesdits moyens (15) comportant notamment un moteur linéaire (14), par exemple sous forme de vérin magnétique, et/ou
des moyens (14) de déplacement du peigne robotisé (10) selon la direction verticale (Z) aptes à déplacer le peigne robotisé (10) en conservant les doigts longitudinaux (11) du peigne robotisé (10) horizontaux, lesdits moyens (14) comportant notamment un ensemble à excentriques.

15. Machine selon l'une quelconque des revendications 10 à 14, **caractérisée par le fait qu'**elle comporte en outre des moyens de mesure (16) d'au moins une caractéristique physique des articles (A) saisis, en particulier telle qu'elle comporte en outre des moyens de détermination (18) aptes à déterminer la présence ou l'absence d'articles défectueux parmi les articles (A) saisis à partir de ladite caractéristique physique des articles (A) saisis et des moyens d'évacuation d'articles détectés défectueux (19), en particulier telle que les moyens d'évacuation d'articles détectés défectueux (19) comprennent un trou d'évacuation (17) séparant le tapis de convoyage (6) du support de lot entrant (2), dans le plan horizontal (H), les moyens d'évacuation d'articles détectés défectueux (19) étant aptes à évacuer par le trou d'évacuation (17) les articles défectueux parmi les articles (A) saisis.

16. Machine selon l'une quelconque des revendications 10 à 15, **caractérisée par le fait que** le support de lot entrant (2) comporte une pluralité de support de pots (3) d'un outil de découpe (4) d'une chaine de production,
en particulier dans laquelle, le cas échéant, la pluralité de structures (11b) est adaptée pour écarter verticalement des articles (A) saisis, de déchets de découpe d'articles (29), lors d'un mouvement du peigne robotisé.

## Patentansprüche

1. Verfahren zum Fördern von Artikeln (A) in einer Produktionslinie, wobei
- eine eingehende Gruppe (L) von Artikeln (A), die eine Mehrzahl von separaten Artikeln (A) umfasst, bereitgestellt wird und auf oder in einem Träger der eingehenden Gruppe (2) so angeordnet wird, dass sie in einer horizontalen Ebene (H) in einer oder mehreren Längssäulen (C) und/oder einer oder mehreren Querreihen ausgerichtet wird,
- die Mehrzahl von Artikeln (A) der eingehenden Gruppe (L) gleichzeitig relativ zu dem Träger der eingehenden Gruppe (2) in einer vertikalen Richtung (Z) orthogonal zu der horizontalen Ebene (H) bewegt werden, wobei die Artikel (A) relativ zu dem Träger der eingehenden Gruppe (2) in der horizontalen Ebene (H) stationär bleiben so dass die Artikel (A) nicht mehr in Kontakt mit dem Träger der eingehenden Gruppe (2) sind und frei in der horizontalen Ebene (H) bewegt werden können, ohne den Träger der eingehenden Gruppe (2) zu berühren,
- die erfassten Artikel (A) vertikal zu einem horizontalen Förderband (6) gebracht werden, wobei die Artikel (A) vertikal um einen vordefinierten vertikalen Abstand (E) zu dem Förderband (6) beabstandet sind,
- die Artikel (A) dann gleichzeitig in vertikaler Richtung (Z) bewegt werden, um die Artikel (A) auf dem Förderband (6) abzulegen,
- die Artikel (A) in einer Gruppe von ausgehenden Artikeln (S) über das Förderband (6) ausgegeben werden,
**dadurch gekennzeichnet, dass**:
- wenn die Artikel (A) vertikal auf das Förderband (6) zugeführt werden, das Förderband (6) in einer Bewegungsrichtung (D) der horizontalen Ebene (H) eine Bewegung mit einer Bewegungsgeschwindigkeit (V) aufweist,
- sich die erfassten Artikel (A) orthogonal zum Förderband (6) befinden, eine horizontale Verschiebung der Artikel (A) gesteuert und mit der Bewegungsgeschwindigkeit (V) des Förderbandes (6) synchronisiert wird, und
- die Artikel (A) in vertikaler Richtung (Z) bewegt werden, um die Artikel (A) auf dem Förderband (6) abzulegen, wobei die mit der Bewegungsgeschwindigkeit (V) des Förderbandes (6) synchronisierte horizontale Bewegung der Artikel (A) beibehalten wird.

2. Verfahren nach Anspruch 1, **dadurch gekennzeichnet, dass** die Artikel (A) der eingehenden Gruppe (L) auf oder in dem Träger der eingehenden Gruppe (2) in Längssäulen (C) angeordnet werden, die regelmäßig so ausgerichtet werden, dass sie einen vordefinierten Querabstand (Py) entlang einer Querrichtung (Y) der horizontalen Ebene (H) aufweisen und entlang der Querrichtung (Y) durch Querabstände zum Greifen (Ey) zueinander beabstandet sind.

3. Verfahren nach Anspruch 2, **dadurch gekennzeichnet, dass** zum gleichzeitigen Bewegen der Mehrzahl von Artikeln (A) der eingehenden Gruppe (L) entlang der vertikalen Richtung (Z) Längsfinger (11) eines Roboterkamms (10) in die Querabstände zum Erfassen (Ey) der eingehenden Gruppe (L) eingeführt werden, wobei die Längsfinger (11) regelmäßig derart ausgerichtet werden, dass sie den vordefinierten Querabstand (Py) aufweisen, und derart angeordnet werden, dass zwei benachbarte Längsfinger (11) in der Lage sind, die Artikel (A) einer Längssäule (C) von Artikeln der eingehenden Gruppe (L) quer zu umschließen und die Artikel (A) der besagten Längssäule (C) zu halten, um sie zu erfassen und in die Vertikale des Förderbandes (6) zu bringen und/oder der Roboterkamm (10) nur in der vertikalen Richtung (Z) und in einer horizontalen Richtung (X) bewegt wird, wobei die horizontale Richtung (X) insbesondere die Bewegungsrichtung (D) des Förderbandes (6) ist, und/oder der Roboterkamm (10) bewegt wird,
- auf einem aktiven Wegabschnitt zum Zuführen der Artikel (A) in die Vertikale des Förderbands (6) mit einer ersten Bewegungsgeschwindigkeit (V1) in der horizontalen Ebene (H), und
- auf einem inaktiven Rückwegabschnitt, wobei der Roboterkamm (10) keine Funktion zum Tragen der Artikel (A) ausführt, mit einer zweiten Bewegungsgeschwindigkeit (V2) in der horizontalen Ebene (H), die größer ist als die erste Bewegungsgeschwindigkeit (V1).

4. Verfahren nach einem der Ansprüche 1 bis 3, **dadurch gekennzeichnet, dass** die Artikel (A) nur von unten, entlang einer vertikalen Richtung (Z), kontaktiert werden, insbesondere wobei die Artikel (A) wenigstens einen inneren Verlängerungsabschnitt (A1) und einen oberen Abschnitt (A2) umfassen, wobei der obere Abschnitt (A2) eine größere Querbeladung als die Querbeladung des inneren Verlängerungsabschnitts (A1) aufweist, und wobei, um die Artikel (A) des eingehenden Gruppes (L) in einer vertikalen Richtung (Z) zu bewegen, der obere Abschnitt (A2) von unten kontaktiert wird, indem der untere Abschnitt (A1) quer umschlossen wird,
wobei insbesondere die Artikel (A) von einem Typ sind, der einen Körper mit einer Bodenwand, einer in sich geschlossenen Seitenwand und einem Verschluss von oben sowie einen Flansch zum Verschluss von oben hin umfasst, wobei der Körper den unteren Verlängerungsabschnitt (A1) bildet und der Flansch den oberen Abschnitt (A2) bildet.

5. Verfahren nach einem der Ansprüche 1 bis 4, **dadurch gekennzeichnet, dass** zum Bewegen der Artikel (A) der eingehenden Gruppe (L) in einer vertikalen Richtung (Z) ein Roboterkamm (10) in Bezug auf den horizontalen Träger der eingehenden Gruppe (2) vertikal angebracht wird, wobei der Roboterkamm (10) horizontal gehalten wird, um die Artikel (A) der eingehenden Gruppe (2) zu kontaktieren und diese vom Träger der eingehenden Gruppe (2) abzuheben, und/oder der Träger der eingehenden Gruppe (2), auf oder in welchem die Artikel (A) angeordnet sind, in Bezug auf einen horizontalen Roboterkamm (10) abgesenkt wird, wobei der Roboterkamm (10) horizontal gehalten wird, so dass die Artikel (A) der eingehenden Gruppe (L) auf dem Roboterkamm (10) abgelegt werden,
wobei insbesondere ein Roboterkamm (10) und/oder der Träger der eingehenden Gruppe (2) so bewegt werden, dass der Roboterkamm (10) und der Träger der eingehenden Gruppe (2) bei einem Kontakt zwischen dem Roboterkamm (10) und den Artikeln (A) der eingehenden Gruppe (L) eine vertikale Relativgeschwindigkeit von weniger als 200 Millimetern pro Sekunde aufweisen.

6. Verfahren nach einem der Ansprüche 1 bis 5, **dadurch gekennzeichnet, dass** zum Bewegen der Artikel (A) in vertikaler Richtung (Z), um die Artikel (A) auf dem Förderband (6) abzulegen, ein Roboterkamm (10) vertikal in Bezug auf das feste Förderband (6) abgesenkt wird, um die Artikel (A) auf dem Förderband (6) abzulegen,
wobei insbesondere, um die Artikel (A) auf dem Förderband (6) abzulegen, der Roboterkamm (10) vertikal in Bezug auf das Förderband (6) über einen vertikalen Hub abgesenkt wird, der größer als der vordefinierte vertikale Abstand (E) ist, so dass die Artikel (A) am Ende des vertikalen Hubs den Kontakt mit dem Roboterkamm (10) verlieren.

7. Verfahren nach einem der Ansprüche 1 bis 6, **dadurch gekennzeichnet, dass** zum Ausgeben der Artikel (A) in einer Gruppe von ausgehenden Artikeln (S) mittels des Förderbandes (6) die Artikel (A) auf dem Förderband (6) in Bewegungsrichtung (D) der horizontalen Ebene (H) geführt werden, insbesondere mittels Längsfingern (11) eines die Artikel (A) quer umschließenden Roboterkamms (10).

8. Verfahren nach einem der Ansprüche 1 bis 7, **dadurch gekennzeichnet, dass**, während die erfassten Artikel (A) in die Vertikale des Förderbandes (6) gebracht werden, wenigstens ein physikalisches Merkmal der erfassten Artikel (A) gemessen wird, insbesondere:
- aus dem gemessenen physikalischen Merkmal das Vorhandensein oder Nichtvorhandensein von fehlerhaften Artikeln unter den erfassten Artikeln (A) bestimmt wird, und
- wenn festgestellt wird, dass sich unter den erfassten Artikeln (A) fehlerhafte Artikel befinden, die erfassten Artikel (A) entfernt werden, und/oder
von den Artikeln (A) Artikelschnittabfälle vertikal entfernt werden, so dass die Artikelschnittabfälle nicht mit den erfassten Artikeln (A) in Kontakt kommen.

9. Verfahren nach einem der Ansprüche 1 bis 8, **dadurch gekennzeichnet, dass** die Artikel (A) der Gruppe von ausgehenden Artikeln (S) in der horizontalen Ebene (H) die gleichen relativen Ausrichtungen und die gleichen relativen Positionen wie die Artikel der eingehenden Gruppe (L) aufweisen, und/oder,
wenn eine horizontale Bewegung der Artikel (A) gesteuert und mit der Bewegungsgeschwindigkeit (V) des Förderbandes (6) synchronisiert wird, eine horizontale Position der Artikel (A) der Gruppe von ausgehenden Artikeln (S) relativ zum Förderband (6), insbesondere eine horizontale Position in der Bewegungsrichtung (D) des Förderbandes, definiert wird.

10. Maschine zum Fördern von Artikeln (A) in einer Produktionslinie, zur Durchführung des Verfahrens nach einem der Ansprüche 1 bis 9, umfassend:
- stromaufwärts einen Träger der eingehenden Gruppe (2), auf oder in dem eine Mehrzahl von Artikeln (A), die von einer eingehenden Gruppe (L) von Artikeln (A) getrennt wurden, derart angeordnet sind, dass sie in einer horizontalen Ebene (H) in einer oder mehreren Längssäulen (C) und/oder einer oder mehreren Querreihen ausgerichtet sind,
- stromabwärts ein horizontales Förderband (6) zum Ausgeben der Artikel (A) in einer Gruppe von ausgehenden Artikeln (S),
- stromaufwärts Mittel (10, 13) zum gleichzeitigen Bewegen der Mehrzahl von Artikeln (A) der eingehenden Gruppe (L) in einer vertikalen Richtung (Z) orthogonal zur horizontalen Ebene (H), wobei die Artikel (A) in Bezug auf den Träger der eingehenden Gruppe (2) in der horizontalen Ebene (H) stationär gehalten werden, so dass die Artikel (A) nicht mehr mit dem Träger der eingehenden Gruppe (2) in Kontakt kommen und in der horizontalen Ebene (H) frei bewegt werden können, ohne den Träger der eingehenden Gruppe (2) zu kontaktieren,
- stromabwärts Mittel (10, 13), um die erfassten Artikel (A) in die Vertikale des Förderbands (6) zu bringen, wobei die Artikel (A) vertikal um einen vordefinierten vertikalen Abstand (E) zum Förderband (6) beabstandet sind,
- stromabwärts Mittel (10, 13) zum gleichzeitigen Bewegen der Artikel (A) in vertikaler Richtung (Z), um die Artikel (A) auf dem Förderband (6) abzulegen,
**dadurch gekennzeichnet, dass**
- das Förderband (6) eine Bewegung in einer Bewegungsrichtung (D) der horizontalen Ebene (H) mit einer Bewegungsgeschwindigkeit (V) aufweist, wenigstens dann, wenn die Artikel (A) dem Förderband (6) vertikal zugeführt werden,
- die Maschine ferner stromabwärts Mittel zum Einstellen und Synchronisieren (20) einer horizontalen Verschiebung der in die Vertikale des Förderbandes (6) gebrachten Artikel (A) mit der Bewegungsgeschwindigkeit (V) des Förderbandes umfasst, und
- die Mittel (10, 13) zum Bewegen der Artikel (A) in der vertikalen Richtung (Z), um die Artikel (A) auf dem Förderband (6) abzulegen, dazu ausgebildet sind, die Artikel (A) in der vertikalen Richtung (Z) zu bewegen, wobei die mit der Bewegungsgeschwindigkeit (V) des Förderbandes (6) synchronisierte horizontale Bewegung der Artikel (A) beibehalten wird.

11. Maschine nach Anspruch 10, **dadurch gekennzeichnet, dass** die Mittel (10, 13), um die erfassten Artikel (A) in die Vertikale des Förderbandes (6) zu bringen, einen Roboterkamm (10) und Mittel zum Bewegen (13) des Roboterkamms (10) umfassen,
wobei insbesondere der Roboterkamm (10) mit Längsfingern (11) versehen ist, die regelmäßig ausgerichtet sind, so dass sie einen vordefinierten Querabstand (Py) entlang einer Querrichtung (Y) der horizontalen Ebene (H) orthogonal zur Bewegungsrichtung (D) des Förderbandes (6) aufweisen und derart angeordnet sind, dass zwei benachbarte Längsfinger (11) in der Lage sind, die Artikel (A) einer Längssäule (C) von Artikeln der eingehenden Gruppe (L) quer zu umschließen und die Artikel (A) der Längssäule (C) zu halten, um sie zu erfassen und sie in die Vertikale des Förderbandes zu bringen,
wobei insbesondere die Längsfinger (11) des Roboterkamms (10) jeweils eine Oberseite (11a) aufweisen, die mit einer Mehrzahl von Strukturen (11b) versehen ist, die entlang der horizontalen Richtung (X) der Längsfinger (11) verteilt sind, wobei insbesondere der Roboterkamm (10) einen Rahmen (21) umfasst, auf welchem die Längsfinger (11) montiert sind, und einen Kammkörper (22) umfasst, der fest mit den Bewegungsmitteln (13) verbunden ist, wobei der Rahmen (21) und der Kammkörper (22) durch entfernbare Verbindungsmittel (23) aneinander befestigt sind, insbesondere wobei die entfernbaren Verbindungsmittel (23) magnetische Verbindungsmittel sind, umfassend ein erstes Element (24), das an dem Kammkörper (22) angebracht ist, und ein zweites Element (25), das an dem Rahmen (21) angebracht ist, wobei die entfernbaren Verbindungsmittel (23) dazu ausgebildet sind, den Rahmen (21) an dem Kammkörper (22) in Reaktion auf eine Last, die ausreichend groß ist, um eine vordefinierte magnetische Anziehungskraft zwischen dem ersten Element (24) und dem zweiten Element (25) zu überwinden, entfernbar zu befestigen.

12. Maschine nach Anspruch 11, **dadurch gekennzeichnet, dass** der Träger der eingehenden Gruppe (2) eine Mehrzahl von Längsnuten (12) aufweist, die mit einem vordefinierten Querabstand (Py) entlang einer Querrichtung (Y) der horizontalen Ebene (H) orthogonal zur Bewegungsrichtung (D) des Förderbandes (6) regelmäßig ausgerichtet sind, wobei die Längsnuten (12) dazu ausgebildet sind, die Längsfinger (11) des Roboterkamms (10) aufzunehmen.

13. Maschine nach einem der Ansprüche 11 und 12, **dadurch gekennzeichnet, dass** das Förderband (6) eine Mehrzahl von synchronisierten Förderbändern (7) umfasst, die mit einem vordefinierten Querabstand (Py) entlang der Querrichtung (Y) orthogonal zur Bewegungsrichtung (D) des Förderbandes (6) ausgerichtet sind und in Querrichtung (Y) durch transversale Bandabstände (Eb) zueinander beabstandet sind, die zur Aufnahme der Längsfinger (11) des Roboterkamms (10) ausgebildet sind.

14. Maschine nach einem der Ansprüche 11 bis 13, **dadurch gekennzeichnet, dass** die Bewegungsmittel (13),
Mittel (15) zur Bewegung des Roboterkamms (10) in einer horizontalen Richtung (X) umfassen, die von den Mitteln zum Einstellen und Synchronisieren (20) mit der Bewegungsgeschwindigkeit (V) des Förderbandes (6) gesteuert werden,
wobei die Mittel (15) insbesondere einen Linearmotor (14), beispielsweise in Form eines magnetischen Zylinders, umfassen und/oder
Mittel (14) zum Bewegen des Roboterkamms (10) in vertikaler Richtung (Z), die dazu ausgebildet sind, den Roboterkamm (10) zu bewegen, während die Längsfinger (11) des Roboterkamms (10) horizontal beibehalten werden, wobei die Mittel (14) insbesondere eine Exzenter-Einheit umfassen.

15. Maschine nach einem der Ansprüche 10 bis 14, **dadurch gekennzeichnet, dass** sie ferner Mittel zum Messen (16) wenigstens eines physikalischen Merkmals der erfassten Artikel (A) umfasst, insbesondere dadurch, dass sie ferner Bestimmungsmittel (18) umfasst, die dazu ausgebildet sind, das Vorhandensein oder Nichtvorhandensein von fehlerhaften Artikeln unter den erfassten Artikeln (A) auf der Grundlage des besagten physikalischen Merkmals der erfassten Artikel (A) zu bestimmen, sowie Mittel zum Entfernen (19) von als fehlerhaft erkannten Artikeln, insbesondere derart, dass die Mittel zum Entfernen (19) von als fehlerhaft erkannten Artikeln ein Entnahmeloch (17) umfassen, welches das Förderband (6) von dem Träger der eingehenden Gruppe (2) in der horizontalen Ebene (H) trennt, wobei die Mittel zum Entfernen (19) von als fehlerhaft erkannten Artikeln dazu ausgebildet sind, die fehlerhaften Artikel durch das Entnahmeloch (17) von den erfassten Artikeln (A) zu entfernen.

16. Maschine nach einem der Ansprüche 10 bis 15, **dadurch gekennzeichnet, dass** der Träger der eingehenden Gruppe (2) eine Mehrzahl von Topfhaltern (3) eines Schneidwerkzeugs (4) einer Produktionslinie umfasst, insbesondere wobei gegebenenfalls die Mehrzahl von Strukturen (11b) dazu ausgebildet sind, erfasste Artikel (A) von Artikelschnittabfällen (29) bei einer Bewegung des Roboterkamms vertikal zu entfernen.

## Claims

1. Method for conveying items (A) in a production line, wherein,
- an incoming batch (L) of items (A) is provided, having a plurality of separate items (A) placed on or in an incoming batch carrier (2) so as to be aligned within a horizontal plane (H) in one or a plurality of longitudinal columns (C) and/or one or more transverse rows,
- the plurality of items (A) in the incoming batch (L) is moved relative to the incoming batch carrier (2), simultaneously, in a vertical direction (Z) perpendicular to the horizontal plane (H), while keeping the items (A) immovable relative to the incoming batch carrier (2) in the horizontal plane (H), so that the items (A) are no longer in contact with the incoming batch carrier (2) and are free to be moved in the horizontal plane (H) without touching the incoming batch carrier (2),
- the captured items (A) are brought to directly above a horizontal conveyor belt (6), the items (A) being vertically distanced from said conveyor belt (6) by a predefined vertical spacing (E),
- then, the items (A) are moved in the vertical direction (Z), simultaneously, to bring the items (A) to rest on the conveyor belt (6),
- the items (A) are discharged in a batch of outgoing items (S) by means of the conveyor belt (6),
**characterized in that**:
- when the items (A) are brought to directly above the conveyor belt (6), the conveyor belt (6) has a movement in a movement direction (D) in the horizontal plane (H) at a movement speed (V),
- as the captured items (A) are vertical to the conveyor belt (6), a horizontal movement of the items (A) is adjusted and is synchronized with said movement speed (V) of the conveyor belt (6), and
- the items (A) are moved in the vertical direction (Z) to bring the items (A) to rest on the conveyor belt (6) while keeping the horizontal movement of the items (A) synchronized with the movement speed (V) of the conveyor belt (6).

2. Method according to claim 1, wherein the items (A) of the incoming batch (L) are arranged on or in the incoming batch carrier (2), in regularly aligned longitudinal columns (C) so as to a have a predefined transverse pitch (Py) in a transverse direction (Y) in the horizontal plane (H) and to be spaced apart from each other in said transverse direction (Y) by transverse gripping spaces (Ey).

3. Method according to claim 2, wherein, in order to move the plurality of items (A) of the incoming batch (L), simultaneously, in the vertical direction (Z), longitudinal fingers (11) of a robotic comb (10) are introduced into the transverse gripping spaces (Ey) of the incoming batch (L), said longitudinal fingers (11) being regularly aligned so as to provide said predefined transverse pitch (Py), and being arranged so that two adjacent longitudinal fingers (11) are able to surround transversely the items (A) of a longitudinal column (C) of items of the incoming batch (L) and to support the items (A) of said longitudinal column (C) in order to capture them and carry them to directly above the conveyor belt (6) and/or
a robotic comb (10) is moved only in the vertical direction (Z) and in a horizontal direction (X), the horizontal direction (X) being in particular the travel direction (D) of the conveyor belt (6), and/or
a robotic comb (10) is moved,
- along an active path segment in order to bring the items (A) to directly above the conveyor belt (6), at a first movement speed (V1) in the horizontal plane (H), and
- along an inactive return path segment, wherein the robotic comb (10) provides no item (A) carrying function, at a second movement speed (V2) in the horizontal plane (H) that is greater than the first movement speed (V1).

4. Method according to any one of claims 1 to 3, wherein the items (A) comprise at least a lower extension portion (A1) and an upper portion (A2), the upper portion (A2) having a transverse dimension greater than a transverse dimension of the lower extension portion (A1), and that, in order to move the items (A) of the incoming batch (L) in a vertical direction (Z), contact is made with the upper portion (A2) from below while transversely surrounding the lower portion (A1), especially wherein the items (A) are of the type comprising a body with a bottom wall, a side wall closed on itself, and a top closure, as well as a flange near the top closure, said body constituting the lower extension portion (A1), said flange constituting the upper portion (A2).

5. Method according to any one of claims 1 to 4, wherein, in order to move the items (A) of the incoming batch (L) in a vertical direction (Z), a robotic comb (10) is raised vertically, relative to the horizontal incoming batch carrier (2), while keeping the robotic comb (10) horizontal, so as to come to contact with, and lift from the incoming batch carrier (2), the items (A) of the incoming batch (L), and/or the incoming batch carrier (2) on or in which are arranged the items (A) is vertically lowered with respect to a horizontal robotic comb (10), while said incoming batch carrier (2) is kept horizontal, so that the items (A) of the incoming batch (L) come to rest on the robotic comb (10), especially a robotic comb (10) and/or the incoming batch carrier (2) are moved so that the robotic comb (10) and the incoming batch carrier (2) have a vertical relative velocity that is less than 200 millimeters per second upon contact between the robotic comb (10) and the items (A) of the incoming batch (L) .

6. Method according to any one of claims 1 to 5, wherein, in order to move the items (A) in the vertical direction (Z) so that the items (A) are brought to rest on the conveyor belt (6), a robotic comb (10) is lowered vertically relative to the fixed conveyor belt (6), so that the items (A) come to rest on the conveyor belt (6), especially wherein, in order to bring the items (A) to rest on the conveyor belt (6), the robotic comb (10) is vertically lowered relative to the conveyor belt (6) along a vertical travel distance greater than the predefined vertical spacing (E), so that the items (A) lose contact with the robotic comb (10) at the end of said vertical travel.

7. Method according to any one of claims 1 to 6, wherein, in order to discharge the items (A) in a batch of outgoing items (S) by means of the conveyor belt (6), the items (A) are guided on the conveyor belt (6) in the movement direction (D) of the horizontal plane (H), in particular by means of longitudinal fingers (11) of a robotic comb (10) transversely surrounding the items (A).

8. Method according to any one of claims 1 to 7, wherein, when the captured items (A) are brought to directly above the conveyor belt (6), at least one physical characteristic of the captured items (A) is measured, especially
- the presence or absence of defective items among the captured items (A) is determined, based on the measured physical characteristic, and
- if the presence of defective items among the captured items (A) is determined, the captured items (A) are discharged
and/or
said items (A) are vertically apart from the cutting waste from the items so that said cutting waste from items does not come into contact with the captured items (A).

9. Method according to any one of claims 1 to 8, wherein the items (A) of the batch of outgoing items (S) have, in the horizontal plane (H), the same relative orientations and the same relative positions as the items of the incoming batch (L) and/or
when adjusting and synchronizing a horizontal movement of the items (A) to the movement speed (V) of the conveyor belt (6), a horizontal position of the items (A) of the batch of outgoing items (S) is defined relative to the conveyor belt (6), in particular a horizontal position along the direction of travel (D) of the conveyor belt.

10. Machine for conveying items (A) in a production line, for implementing the method according to any one of claims 1 to 9, which comprises:
- upstream, an incoming batch carrier (2) on or in which are arranged a plurality of separate items (A) of an incoming batch (L) of items (A) so as to be aligned within a horizontal plane (H) in one or more longitudinal columns (C) and/or one or more transverse rows,
- downstream, a horizontal conveyor belt (6) for discharging the items (A) in a batch of outgoing items (S),
- upstream, means (10, 13) for moving the plurality of items (A) of the incoming batch (L), simultaneously, in a vertical direction (Z) perpendicular to the horizontal plane (H), while keeping the items (A) immovable in the horizontal plane (H) relative to the incoming batch carrier (2), so that items (A) are no longer in contact with the incoming batch carrier (2) and are free to be moved within the horizontal plane (H) without touching the incoming batch carrier (2),
- downstream, means (10, 13) for bringing the captured items (A) to directly above the conveyor belt (6), the items (A) being vertically distant from said conveyor belt (6) by a predefined vertical spacing (E),
- downstream, means (10, 13) for moving the items (A) in the vertical direction (Z), simultaneously, in order to bring the items (A) to rest on the conveyor belt (6),
**characterized in that**
- the conveyor belt (6) has movement in a direction of travel (D) in the horizontal plane (H) at a movement speed (V) at least when the items (A) are brought to directly above the conveyor belt (6),
- the machine further comprises, downstream, means for adjustment and synchronization (20) with the movement speed (V) of the conveyor belt, of a horizontal movement of the items (A) brought to directly above the conveyor belt (6), and
- means (10, 13) for moving the items (A) in the vertical direction (Z) in order to bring the items (A) to rest on the conveyor belt (6) are adapted to move said items (A) in the vertical direction (Z) while keeping the horizontal movement of the items (A) synchronized with the movement speed (V) of the conveyor belt (6).

11. Machine according to claim 10, wherein the means (10, 13) for bringing the captured items (A) to directly above the conveyor belt (6) comprise a robotic comb (10) and means (13) for moving the robotic comb (10)
more especially wherein the robotic comb (10) is provided with longitudinal fingers (11) regularly aligned so as to have a predefined transverse pitch (Py) in a transverse direction (Y) of the horizontal plane (H) that is perpendicular to the direction of travel (D) of the conveyor belt (6), and arranged such that two adjacent longitudinal fingers (11) are adapted to surround transversely the items (A) of a longitudinal column (C) of items of the incoming batch (L) and to support the items (A) of said longitudinal column (C) so as to capture them and carry them to directly above the conveyor belt,
especially wherein the longitudinal fingers (11) of the robotic comb (10) each have an upper face (11a) provided with a plurality of structures (11b) distributed along the longitudinal direction (X) of the longitudinal fingers (11),
especially wherein the robotic comb (10) comprises a frame (21) on which are mounted the longitudinal fingers (11) and a comb body (22) integral with movement means (13), the frame (21) and the comb body (22) being secured together by detachable assembly means (23), notably wherein the detachable assembly means (23) are magnetic assembly means comprising a first member (24) mounted on the comb body (22) and a second member (25) mounted on the frame (21), the detachable assembly means (23) being adapted to secure the frame (21) to the comb body (22) in a manner that is detachable in response to a force sufficiently strong to overcome a predefined magnetic attraction between the first member (24) and the second member (25).

12. Machine according to claim 11, wherein the incoming batch carrier (2) comprises a plurality of longitudinal grooves (12) regularly aligned at a predefined transverse pitch (Py) in a transverse direction (Y) in the horizontal plane (H) that is perpendicular to the direction of travel (D) of the conveyor belt (6), said longitudinal grooves (12) being adapted to accommodate the longitudinal fingers (11) of the robotic comb (10).

13. Machine according to either of claims 11 and 12, wherein the conveyor belt (6) comprises a plurality of conveying strands (7), synchronized, aligned at a predefined transverse pitch (Py) in a transverse direction (Y) perpendicular to the direction of travel (D) of the conveyor belt (6), and spaced apart from each other in the transverse direction (Y) by transverse strand spaces (Eb) adapted to accommodate the longitudinal fingers (11) of the robotic comb (10).

14. Machine according to any one of claims 11 to 13, wherein the movement means (13) comprise
means (15) for moving the robotic comb (10) in a horizontal direction (X), controlled by the means (20) for adjustment and synchronization with the movement speed (V) of the conveyor belt (6), said means (15) comprising in particular a linear motor (14), for example a magnetic actuator, and/or
means (14) for moving the robotic comb (10) in the vertical direction (Z) which are capable of moving the robotic comb (10) while keeping the longitudinal fingers (11) of the robotic comb (10) horizontal, said means (14) comprising in particular an eccentric assembly.

15. Machine according to any one of claims 10 to 14, wherein it further comprises means (16) for measuring at least one physical characteristic of the captured items (A), in particular wherein it further comprises determination means (18) capable of determining the presence or absence of defective items among the captured items (A) based on said physical characteristic of the captured items (A) and means for discharging the defective items detected (19), in particular wherein the means for discharging defective items detected (19) comprise a discharge outlet (17) between the conveyor belt (6) and the incoming batch carrier (2), in the horizontal plane (H), the means for discharging the defective items detected (19) being capable of discharging through the discharge outlet (17) the defective items among the captured items (A).

16. Machine according to any one of claims 10 to 15, wherein the incoming batch carrier (2) comprises a plurality of pot supports (3) of a cutting tool (4) of a production line, in particular wherein the plurality of structures (11b) is adapted to distance the captured items (A) vertically from item cutting waste (29), during movement of the robotic comb.
